# EUROPEAN PATENT APPLICATION

(11) **EP 4 797 168 A1**
(43) Date of publication of application: **26.08.2026**
(21) Application number: 25159688.8
(22) Date of filing: 24.02.2025
(51) Int. Cl.: G06N 10/40, G06N 10/20

(54) **METHOD OF PERFORMING A QUANTUM COMPUTATION, QUANTUM COMPUTER, CONTROLLER FOR A QUANTUM COMPUTER, COMPUTER PROGRAM AND COMPUTER-READABLE DATA CARRIER OR DATA CARRIER SIGNAL**

(71) Applicant: Universität Innsbruck, 6020 Innsbruck (AT)
(72) Inventor: Dür, Univ. Prof. Mag. Dr. Wolfgang, 6067 Absam (AT)
(74) Representative: Zimmermann & Partner Patentanwälte mbB

(57) **Abstract**

A method of performing a quantum computation is provided. The method includes preparing a first entangled quantum state (250) on at least a subset of a set of auxiliary constituents (110) of a quantum system (100). The quantum system includes the set of auxiliary constituents and a set of primary constituents (120). The method includes performing N quantum protocols. Each quantum protocol realizes a quantum operation (720ab, 920cd, 920ef, 1320ab, 1320cd) of N quantum operations. Each quantum operation acts on two or more primary constituents. For each quantum operation, a domain set consists of the primary constituents acted upon by the quantum operation. The quantum protocol realizing the quantum operation comprises: processing a portion of the first entangled quantum state, or a portion of a partially processed first entangled quantum state (450, 950), to prepare an auxiliary entangled quantum state (410ab) on an auxiliary set (110a, 110b), wherein the processing includes performing one or more single-body quantum operations on one or more auxiliary constituents of the first entangled quantum state or of the partially processed first entangled quantum state; coupling each primary constituent (120a, 120b) of the domain set to an associated auxiliary constituent (110a, 110b) of the auxiliary set by performing one or more short-range quantum interactions (530a, 530b); and performing one or more measurements on at least one primary constituent (120a, 120b) of the domain set and/or on at least one auxiliary constituent (110a, 110b) of the auxiliary set.

## Description

### FIELD

Embodiments described herein relate to methods of performing a quantum computation, and to quantum computers for performing such methods. Embodiments described herein more specifically relate to methods of realizing sequences of quantum operations, such as sequences of unitary quantum gates, on groups of constituents, such as qubits, of a quantum system.

### BACKGROUND

Quantum computers are computing devices which make use of quantum mechanical effects to solve computational problems. In a quantum computer, information is carried by constituents, such as e.g. quantum bits ("qubits"), of a quantum system. This is in contrast to conventional computers, which operate with classical bits, i.e. 0 and 1. During a quantum computation, quantum bits can be processed by evolving the quantum system. For example, groups of qubits of the quantum system can be coupled to each other according to a specified interaction. By evolving the quantum system, the information carried by the quantum system can be processed in order to carry out a computation, i.e. in order to solve a computational problem. In many cases, a quantum computer can be assisted by a classical computer, i.e. a computer operating with classical bits. The classical computer can provide instructions to the quantum computer as to how the qubits in the system are to be processed by the quantum computer.

Whereas several theoretical models of quantum computation have been put forward, it remains a challenge to implement a quantum computer in practice. For example, in realistic settings, only short-range quantum interactions between the qubits (or other constituents) may be available, such as interactions between neighboring qubits in a two-dimensional quantum architecture. Even though it is in principle possible to implement long-range quantum interactions between distant qubits by performing lengthy sequences of short-range interactions (e.g. by performing SWAP operations), such sequences are inherently sequential, thus increasing the computational depth of the quantum computation. Furthermore, a quantum computation that is made up of a sequence of quantum gates ("quantum circuit"), as is usually the case, requires coupling the qubits according to complex patterns, requiring a considerable flexibility of the quantum computer, which might not be available in many real-life implementations.

In light of the above, there is a need for improved methods for performing a quantum computation.

### SUMMARY

According to an embodiment, a method of performing a quantum computation is provided. The method includes preparing a first entangled quantum state on at least a subset of a set of auxiliary constituents of a quantum system. The quantum system includes the set of auxiliary constituents and a set of primary constituents. The method includes performing N quantum protocols on the quantum system. Each quantum protocol of the N quantum protocols realizes a quantum operation of N quantum operations. Each quantum operation of the N quantum operations acts on two or more primary constituents. For each quantum operation of the N quantum operations, a domain set associated with the quantum operation consists of the primary constituents acted upon by the quantum operation.

For each quantum operation of the N quantum operations, the quantum protocol realizing the quantum operation includes processing a portion of the first entangled quantum state, or a portion of a partially processed first entangled quantum state being a quantum state resulting from processing the first entangled quantum state in one or more previous quantum protocols of the N quantum protocols, to prepare an auxiliary entangled quantum state on an auxiliary set including two or more auxiliary constituents. The processing includes performing one or more single-body quantum operations on one or more auxiliary constituents of the first entangled quantum state or of the partially processed first entangled quantum state.

For each quantum operation of the N quantum operations, the quantum protocol realizing the quantum operation further includes coupling each primary constituent of the domain set of the quantum operation to an associated auxiliary constituent of the auxiliary set by performing one or more short-range quantum interactions. The coupling is performed before, during or after the processing of the portion of the first entangled state or the portion of the partially processed first entangled quantum state.

For each quantum operation of the N quantum operations, the quantum protocol realizing the quantum operation further includes performing one or more measurements on at least one primary constituent of the domain set and/or on at least one auxiliary constituent of the auxiliary set. The one or more measurements are performed in addition to the coupling or the one or more measurements form part of the coupling.

According to a further embodiment, a method of performing a quantum computation is provided. The method includes performing N quantum protocols on a quantum system including a set of primary constituents and a set of auxiliary constituents. Each quantum protocol of the N quantum protocols realizes a quantum operation of N quantum operations. Each quantum operation of the N quantum operations acts on two or more primary constituents. For each quantum operation of the N quantum operations, a domain set associated with the quantum operation consists of the primary constituents acted upon by the quantum operation. The N quantum protocols include a first quantum protocol realizing a first quantum operation of the N quantum operations and a second quantum protocol realizing a second quantum operation of the N quantum operations.

The first quantum protocol includes processing a first plurality of auxiliary constituents to prepare a first auxiliary entangled quantum state on a first auxiliary set including two or more auxiliary constituents. At least a subset of the first plurality of auxiliary constituents defines a first path of auxiliary constituents. The first quantum protocol includes coupling each primary constituent of the domain set of the first quantum operation to an associated auxiliary constituent of the first auxiliary set by performing one or more short-range quantum interactions. The coupling is performed before, during or after the processing of the first plurality of auxiliary constituents. The first quantum protocol includes performing one or more measurements on at least one primary constituent of the domain set of the first quantum operation and/or on at least one auxiliary constituent of the first auxiliary set. The one or more measurements are performed in addition to the coupling, or the one or more measurements form part of the coupling.

The second quantum protocol includes processing a second plurality of auxiliary constituents to prepare a second auxiliary entangled quantum state on a second auxiliary set including two or more auxiliary constituents. At least a subset of the second plurality of auxiliary constituents defines a second path of auxiliary constituents. The second path crosses the first path. The second quantum protocol includes coupling each primary constituent of the domain set of the second quantum operation to an associated auxiliary constituent of the second auxiliary set by performing one or more short-range quantum interactions. The coupling is performed before, during or after the processing of the second plurality of auxiliary constituents. The second quantum protocol includes performing one or more measurements on at least one primary constituent of the domain set of the second quantum operation and/or on at least one auxiliary constituent of the second auxiliary set. The one or more measurements are performed in addition to the coupling, or the one or more measurements form part of the coupling.

According to a further embodiment, a quantum computer is provided. The quantum computer includes a quantum system including constituents. The quantum computer includes a quantum processing system for processing the quantum system. The quantum processing system includes at least one of a quantum evolution device to evolve one or more constituents of the quantum system and a measurement device to measure one or more constituents of the quantum system. The quantum computer includes a controller connected to the quantum processing system, the controller being configured to instruct the quantum processing system to perform a method of performing a quantum computation according to embodiments described herein.

According to a further embodiment, a controller for a quantum computer acting on a quantum system is provided. The controller is configured to instruct the quantum computer to perform a method of performing a quantum computation according to embodiments described herein.

According to a further embodiment, a computer program including instructions which, when the computer program is executed by a quantum computer, cause the quantum computer to carry out a method of performing a quantum computation according to embodiments described herein.

According to a further embodiment, a computer-readable data carrier or a data carrier signal carrying a computer program according to embodiments described herein is provided.

Embodiments are also directed to methods for operating the systems described herein, and to the use of the systems to perform the methods according to the embodiments described herein.

Further advantages, features, aspects and details that can be combined with embodiments described herein are evident from the dependent claims, the description and the drawings.

### BRIEF DESCRIPTION OF THE DRAWINGS

A full and enabling disclosure to one of ordinary skill in the art is set forth more particularly in the remainder of the specification including reference to the accompanying drawings wherein:
- FIG. 1: shows a quantum system including a set of primary constituents and a set of auxiliary constituents;
- FIG. 2: shows a first entangled quantum state defined on at least a subset of the set of auxiliary constituents;
- FIGs. 3-4: illustrate the processing of a subset of auxiliary constituents of the first entangled quantum state by single-body quantum operations to prepare an auxiliary entangled quantum state on two or more auxiliary constituents;
- FIGs. 5-7: illustrate the realization of a quantum operation acting on two primary constituents by coupling the primary constituents to corresponding auxiliary constituents of the auxiliary entangled quantum state and subsequently measuring said auxiliary constituents;
- FIG. 8-9: illustrate the realization of several quantum operations acting on different groups of primary constituents, wherein each quantum operation is realized by performing a quantum protocol as described herein;
- FIG. 10: illustrates a set of single-body operations performed on auxiliary constituents of the first entangled quantum state in order to prepare an auxiliary entangled quantum state, wherein the set of single- body operations includes a path shaped as a stepped pattern ("zipper scheme");
- FIG. 11: illustrates a first set of single-body operations performed on a first set of auxiliary constituents of the first entangled quantum state in order to prepare a first auxiliary entangled quantum state, wherein the first set of single- body operations includes a first path, and illustrates a second set of single- body operations performed on a second set of auxiliary constituents of the first entangled quantum state in order to prepare a second auxiliary entangled quantum state, wherein the second set of single- body operations includes a second path that crosses the first path;

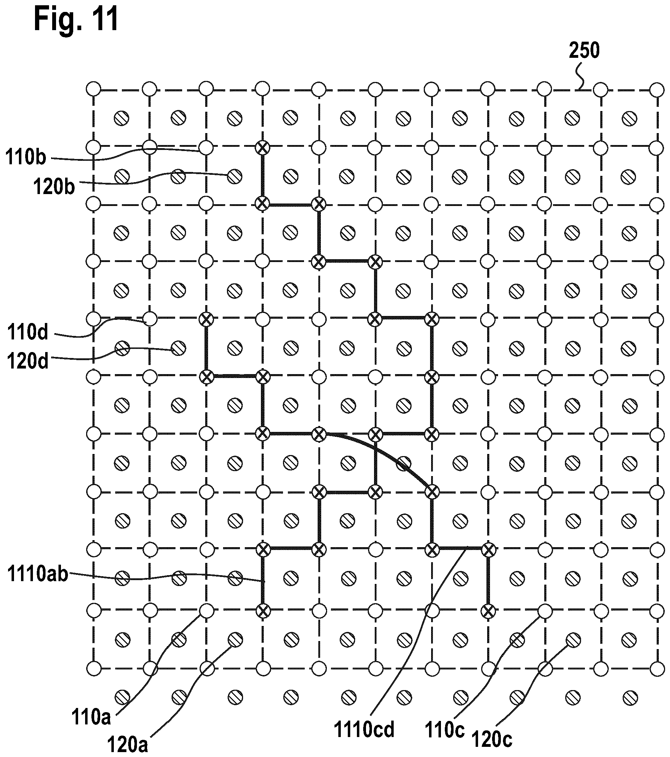

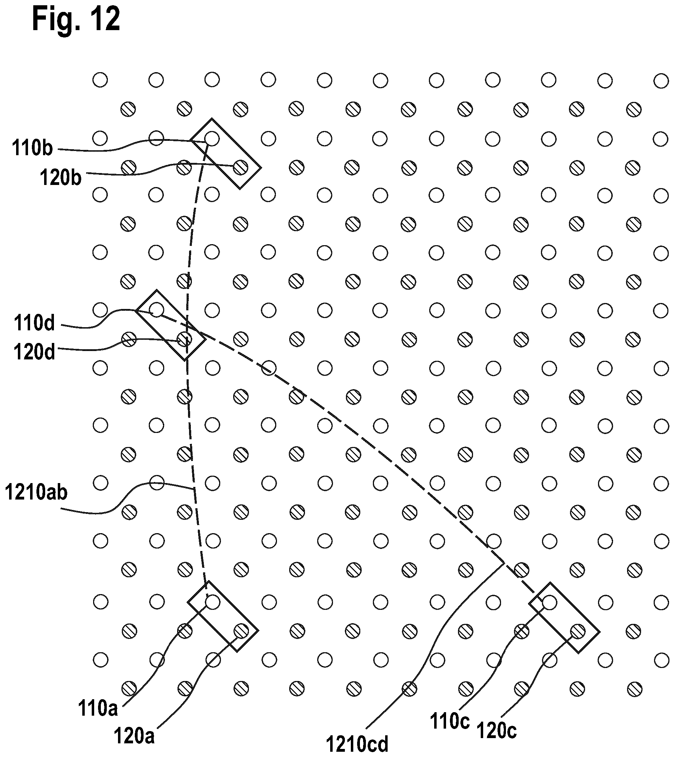

- FIGs. 12-13: illustrate the realization of a first quantum operation and a second quantum operation acting on respective sets of primary constituents, wherein the realization involves preparing the first auxiliary entangled quantum state and the second auxiliary quantum state using the operations illustrated in Fig. 11, coupling the primary constituents under consideration to the first auxiliary entangled quantum state and the second auxiliary quantum state, respectively, and measuring the auxiliary constituents of the first auxiliary entangled quantum state and the second auxiliary quantum state;
- FIGs. 14-20: illustrate an alternative procedure for preparing auxiliary entangled quantum states that does not involve the preparation of a first entangled quantum state;
- FIG. 21: shows a schematic representation of quantum computer for performing a method according to embodiments described herein;
- FIGs. 22(a-c): provide a further illustration of the procedures described herein, wherein the auxiliary qubits are arranged according to a two-dimensional square lattice with a primary qubit arranged in each plaquette of the lattice;
- FIGs. 23(a-b): provide a further illustration of entanglement-structure-preserving measurement paths, where the qubits are measured according to the "zipper scheme";
- FIGs. 24(a-c): illustrate how the procedures described herein can be applied to a quantum system where the qubits are arranged according to a triangular-square lattice;
- FIGs. 25(a-c) and 26: illustrate how the procedures described herein can be applied to a quantum system where the qubits are arranged according to a decorated honeycomb lattice;
- FIGs. 27(a-d): illustrate how the procedures described herein can be applied in an alternative manner to a quantum system where the qubits are arranged according to a decorated honeycomb lattice; and
- FIGs. 28(a-c): provide a further illustration of the alternative procedure for preparing auxiliary entangled quantum states that does not involve the preparation of a first entangled quantum state.

### DETAILED DESCRIPTION

Reference will now be made in detail to the various exemplary embodiments, one or more examples of which are illustrated in each figure. Each example is provided by way of explanation and is not meant as a limitation. For example, features illustrated or described as part of one embodiment can be used on or in conjunction with other embodiments to yield yet further embodiments. It is intended that the present disclosure includes such modifications and variations.

Within the description of the drawings, the same reference numbers refer to the same or similar components. Generally, only the differences with respect to the individual embodiments are described. The structures shown in the drawings are not necessarily depicted true to scale, and may contain details drawn in an exaggerated way to allow for a better understanding of the embodiments.

A quantum computer as described herein operates on quantum constituents, also called "constituents" for short. The quantum constituents are physical entities exhibiting quantum effects. This means that the quantum constituents are real-world objects. The quantum constituents may be called physical quantum constituents (or "physical constituents" for short) to highlight this property. Embodiments described herein are not limited to any particular type of quantum constituents. For example, the quantum constituents may be atoms, ions, superconducting qubits, quantum dots, NV centers, photons, electrons, electromagnetic or mechanical resonators, and the like.

For example, the quantum constituents can be qubits. A qubit shall be understood as a physical entity that realizes a two-level quantum system. The constituents may be d-level quantum systems ("qudits") with d > 2, wherein only two levels of the d levels might be used. Alternatively, the constituents may be d-level quantum systems for some d larger than two, where all d levels are used ("qudits"), or may even be infinite-dimensional quantum systems. Further, not all constituents need to be of a same type. For example, some constituents can be qubits while other constituents can be d-level quantum systems for some d larger than two.

The quantum constituents can be regarded as smaller quantum systems that jointly form a larger physical quantum system. The physical quantum system can be in different quantum states, such as an initial quantum state (in which the physical quantum system may be prepared at the beginning of a quantum computation) and a final quantum state (in which the physical quantum system may end up due to the quantum computation). The physical quantum system can be evolved from the initial quantum state to the final quantum state by performing a quantum evolution, e.g. by performing sequences of unitary operators and/or measurements. Such a quantum evolution is a real-world process, and particularly a controlled technical process (quantum computation) which brings the physical quantum system from the initial quantum state to an *a priori* unknown final quantum state that, for example, contains information about a computational problem that is to be solved by the quantum computer. Information regarding the computational problem can be revealed by measuring the physical quantum system or a part thereof, i.e., one or more of the quantum constituents. The act of measuring is also a physical/technical process. Measurements allow to obtain a read-out of the physical quantum system. A read-out of a physical quantum system is a set of one or more measurement values obtained by measurements of quantum constituents, involving physical interactions with the quantum constituents.

In the present disclosure, the term "quantum system" (e.g. the quantum system 100 shown in the figures) is understood to refer to a physical quantum system as described above.

A quantum computer may include n quantum constituents, wherein n may be at least two, particularly n may be 5, 10, 20, 50, 100, 500, 1000, 10000 or more. It shall be understood that the quantum systems shown in the figures and described in the examples may be much smaller for illustrative and explanatory purposes, but this shall not be understood to provide any limitation.

Embodiments described herein relate to a method of realizing the quantum operations of a quantum computation in a particular manner. Specifically, the present disclosure is concerned with the realization of quantum operations that act on two or more quantum constituents. Such quantum operations involve quantum interactions between two or more quantum constituents and may be challenging to implement, particularly if the constituents are far apart, i.e. if the quantum operations are long-range quantum operations. According to embodiments described herein, each such quantum operation is realized indirectly by performing a quantum protocol, i.e. a sequence that itself includes several quantum operations, that, as a whole, realizes the desired quantum operation. Further, apart from the constituents on which the mentioned quantum operations act, which are referred to herein as "primary constituents", the method involves the provision of an initial entangled quantum state (called "first entangled quantum state" herein), such as a cluster state, defined on a subset of "auxiliary constituents". In each of the mentioned quantum protocols, a portion of the entanglement in the initial entangled quantum state is consumed by means of single-body quantum operations (e.g. measurements) in order to generate a smaller entangled quantum state, such as a Bell pair, GHZ state (Greenberger-Horne-Zeilinger) and the like, on a set of auxiliary constituents. This smaller entangled quantum state, called auxiliary quantum state herein, is in turn used to realize the desired quantum operation by performing a teleportation-like scheme.

The present method has the advantage that the initial entangled quantum state, e.g. a cluster state, can be prepared in a relatively simple manner by short-range quantum operations only, independently of the particular quantum operations that are to be realized. Further, each subsequent quantum protocol may involve short-range operations only, and in fact only a limited number of short-range operations, even if the desired quantum operations are long-range operations. Accordingly, the present method allows realizing long-range quantum operations in an effective manner. Further, the present method allows for a large degree of parallelization and thus a small computational depth, since a large number of the quantum protocols can be performed in parallel.

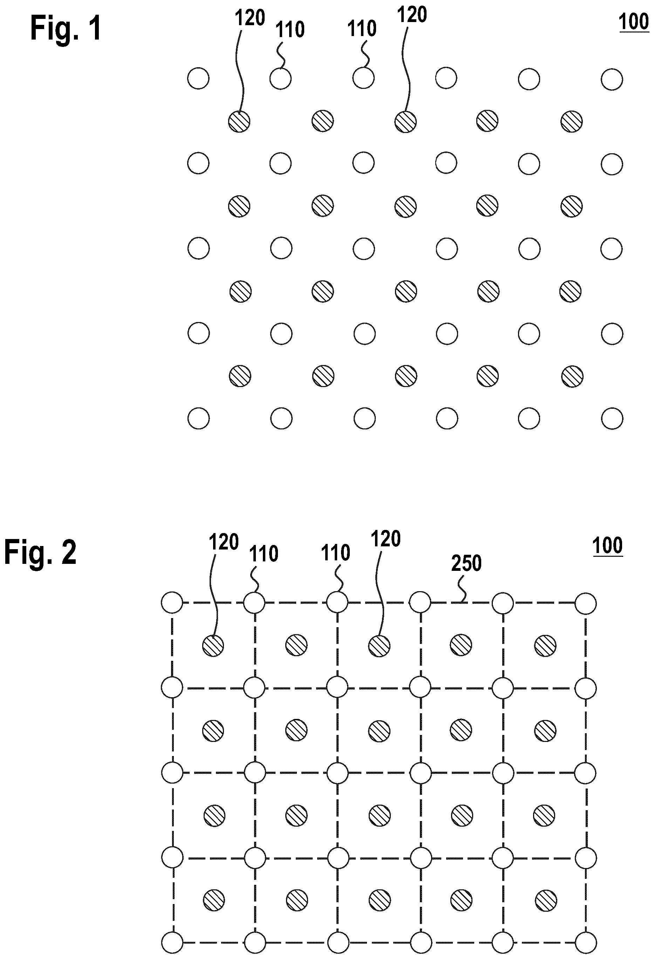

Fig. 1 shows a quantum system 100 involving a set of quantum constituents, or constituents for short. The set of constituents includes a set of primary constituents 120 and a set of auxiliary constituents 110. The set of primary constituents may be disjoint from the set of auxiliary constituents.

Embodiments described herein involve the realization of a quantum computation, e.g. a quantum circuit involving a sequence of unitary quantum gates (yet the disclosure is not limited to unitary quantum circuits). Each quantum operation that is part of the quantum computation may act on one or more primary constituents 120, and may not act on any auxiliary constituents 110. In other words, the primary constituents are considered to be the constituents on which the quantum operations (e.g. gates) of the quantum computation act. The primary constituents 120 may function as information carriers carrying the information that is processed by the quantum operations that form the quantum computation.

The quantum computation may be represented as a sequence of quantum operations O₁O₂ ... Oₙ, where each quantum operation Oᵢ acts on one or more primary constituents 120 (and not on any auxiliary constituents 110). A quantum operation, as described herein, may be a unitary operation, a measurement, a completely positive map, or any other quantum operation. Each quantum operation Oᵢ of the quantum computation may be a single-body quantum operation or a many-body quantum operation. A single-body quantum operation is a quantum operation that acts on a single constituent of the quantum system 100. A many-body quantum operation is a quantum operation that acts on two or more constituents of the quantum system. A single-body quantum operation Oᵢ may be realized relatively easily, by directly applying the quantum operation Oᵢ to the primary constituent 120 in question. Accordingly, any single-body quantum operations that are included in the quantum computation will generally be ignored in the present disclosure, since there are no inherent difficulties in implementing single-body quantum operations. In comparison, realizing a many-body quantum operation Oᵢ acting on several primary constituents is more challenging. According to embodiments described herein, a many-body quantum operation Oᵢ is realized by performing a quantum protocol. The quantum protocol itself includes several quantum operations which, as a whole, result in the realization of the many-body quantum operation Oᵢ on the desired primary constituents. The quantum protocol involves at least some quantum operations that act on one or more auxiliary constituents 110. In other words, the auxiliary constituents 110 of the quantum system 100 are "extra" constituents that are used to realize the many-body quantum operations Oᵢ of the quantum computation. Specifically, and as detailed below, the auxiliary constituents 110 function as constituents on which one or more entangled quantum states are generated that are subsequently used for the realization of the quantum operations Oᵢ. The auxiliary constituents 110 may function as an entanglement resource for the quantum operations Oᵢ that are to be realized.

In light of the above, the quantum computation is said to include a plurality of N quantum operations Oᵢ. The number N may be 2 or greater, 3 or greater, 5 or greater, 10 or greater, 100 or greater, or 1000 or greater. The plurality of N quantum operations can be considered to include only many-body quantum operations, i.e. quantum operations Oᵢ acting on two or more primary constituents. Whereas the quantum computation as a whole may include single-body quantum operations, such single-body operations might not be included in the plurality of N quantum operations, since the implementation of single-body quantum operations is straightforward. The method described herein provides the execution of N quantum protocols for respectively realizing the plurality of N quantum operations.

It may be the case that the primary constituents 120 and the auxiliary constituents 110 are physically identical to each other, i.e. that there is no physical distinction between a primary constituent 120 and an auxiliary constituent 110. For example, the primary constituents and the auxiliary constituents may both be qubits, and may both have the same physical implementation (e.g. both being implemented as superconducting qubits). The distinction between a primary constituent and an auxiliary constituent may involve the function of the constituents. A primary constituent 120 may have a different function than an auxiliary constituent 110, as described above.

Alternatively, the primary constituents 120 and the auxiliary constituents 110 may be different types of constituents. For example, the auxiliary constituents may be qubits whereas the primary constituents may be d-level quantum systems for some d>2. In another example, the primary constituents and the auxiliary constituents may both be qubits but physically realized in a different manner. These are merely examples, and the disclosure shall not be limited thereto.

A constituent of the quantum system may be assigned, e.g. by a controller of the quantum computer, as being either a primary constituent 120 or an auxiliary constituent 110. The assignment may be performed at an initial stage of the quantum computation, e.g. before any of the quantum protocols are performed, or during a later stage of the computation. An assignment of a constituent as being a primary constituent 120 or an auxiliary constituent 110 may be maintained throughout the entire quantum computation (i.e. until all quantum operations of the quantum computation have been realized by the respective quantum protocols), or during only a portion of the quantum computation. The assignment of a constituent as being a primary constituent or an auxiliary constituent may be a variable assignment. A constituent may be assigned to be an auxiliary constituent 110 during a first quantum protocol for the realization of a first quantum operation Oᵢ of the quantum computation, and the same constituent may be assigned to be a primary constituent 120 during a second quantum protocol for the realization of a second quantum operation Oⱼ of the quantum computation, or vice versa. For example, a first subset of the constituents may be assigned to be the set of primary constituents at least for the duration of the N quantum protocols for realizing the plurality of N quantum operations. A second subset of the constituents may be assigned to be the set of auxiliary constituents at least for the duration of the N quantum protocols. After the N quantum protocols have been performed, the assigned primary constituents and auxiliary constituents may remain the same or may be changed.

The primary constituents 120 may be arranged according to a spatial arrangement extending in at least two spatial dimensions. Such an arrangement is distinguished from a linear (i.e. one-dimensional) arrangement. For example, as illustrated in Fig. 1, the primary constituents 120 may be arranged according to a two-dimensional lattice. Yet the disclosure is not limited thereto. For example, the primary constituents 120 may be arranged according to a three-dimensional lattice, or according to other geometrical arrangements that need not be lattices.

As illustrated in Fig. 2, a first entangled quantum state 250 may be prepared on at least a subset of the auxiliary constituents 110. It may be the case that the first entangled quantum state 250 does not include any primary constituents 120. The first entangled quantum state 250 may be decoupled from the primary constituents 120.

An entangled quantum state, as described herein, may be understood as a quantum state that cannot be expressed as a tensor product of quantum states of individual constituents (or as a mixture of such tensor products, in the case of mixed quantum states). An entangled quantum state may be a fully entangled quantum state, being a quantum state that cannot be expressed as a tensor product of two or more smaller quantum states (or as a mixture of such tensor products, in the case of mixed quantum states), even when the smaller quantum states are permitted to include groups of constituents. In a fully entangled quantum state, entanglement exists across any possible partition of the fully entangled quantum state into two subgroups of constituents. The first entangled quantum state, and/or any auxiliary entangled quantum state described herein, may be a fully entangled quantum state.

The first entangled quantum state 250 may be prepared in any suitable manner, e.g. by performing a set of entangling unitary operations that generate the first entangled quantum state 250 from an initial product state, by an adiabatic evolution, or by any other kind of quantum evolution that allows preparing the first entangled quantum state 250. According to embodiments, the first entangled quantum state 250 may be prepared by performing short-range quantum operations only.

A short-range quantum operation refers to a quantum operation (e.g. a unitary operation, a measurement, a completely positive map, and the like) that only involves quantum interactions between constituents that are spaced apart from each other by a distance of at most an interaction cut-off distance of the quantum system. A short-range quantum operation may act only on a subgroup of constituents, wherein any two constituents within the subgroup are distanced from each other by a distance of at most the interaction cut-off distance of the quantum system.

A single-body quantum operation, i.e. a quantum operation acting on a single constituent, shall be regarded as a short-range quantum operation.

The interaction cut-off distance of the quantum system can be understood as a maximum distance within which direct quantum interactions between the constituents of the quantum system can be engineered. The particular value of the interaction-cut off distance of a given quantum system may depend on the experimental conditions of the quantum system, such as the type of constituents that are physically realized (e.g. whether the constituents are ions, photons, or the like), the spatial arrangement of the constituents (e.g. whether the constituents are arranged on a line or according to a two-dimensional lattice), and the types of quantum interactions that are experimentally available.

An interaction cut-off distance may be a constant distance. A constant distance may be understood as a distance that does not increase along with the total number of constituents of the quantum system (where said total number may increase as quantum computations with increasing input size are considered). The interaction cut-off distance may be much smaller than a maximal constituent distance between the constituents of the quantum system. For example, the interaction cut-off distance may be 30% or less of the maximal constituent distance, in particular 20% or less, more particularly 10% or less. For a plurality of constituent arranged according to a lattice, a short-range quantum operation may be an r-range quantum operation. An r-range quantum operation may be a quantum operation acting only on a subgroup of constituents, wherein any two constituents within the subgroup are spaced apart from each other by a distance of at most r times an elementary distance (lattice constant) of the lattice. The number r may be a constant, i.e. independent of the total number of constituents of the lattice. For example, r may be from 1 to 5, e.g. r = √2, 2, 3, 4 or 5. For example, when considering the notion of an r-range quantum operation acting on primary constituents 120 in Fig. 1, the elementary distance (lattice constant) of the lattice of primary constituents 120 may refer to the minimal distance between any two primary constituents 120.

The first entangled quantum state 250 may be defined on at least a subset of the set of auxiliary constituents of the quantum system. The auxiliary constituents of the first entangled quantum state 250 (being the auxiliary constituents on which the first entangled quantum state 250 is defined) may be arranged according to a spatial arrangement extending in at least two spatial dimensions. Such an arrangement is distinguished from a linear (i.e. one-dimensional) arrangement. For example, as illustrated in Fig. 2, the auxiliary constituents of the first entangled quantum state 250 may be arranged according to a two-dimensional lattice. Yet the disclosure is not limited thereto. For example, the auxiliary constituents of the first entangled quantum state 250 may be arranged according to a three-dimensional lattice, or other geometrical arrangements that need not be lattices. According to embodiments, the first entangled quantum state 250 may be a fully entangled quantum state, and the auxiliary constituents of the first entangled quantum state 250 may be arranged according to a spatial arrangement extending in at least two spatial dimensions.

In one example, the first entangled quantum state 250 may be a graph state, more specifically a cluster state. The first entangled quantum state 250 may be associated with a graph having a set of nodes and a set of edges. Each edge of the set of edges may represent a connection between two nodes of the set of nodes. Each node of the set of nodes may be associated with an auxiliary constituent 110 of the first entangled quantum state 250. Each edge of the set of edges, being an edge between two nodes of the set of nodes, may be associated with a quantum interaction between the two auxiliary constituents associated with the two nodes. In an illustrative example, the quantum interaction may correspond to a controlled-Z gate acting on the two constituents in question (where the controlled-Z gate acts as |00> → |00>, |01> → 101>, |10> → |10> and |11> → -|11>); yet the controlled-Z gate is merely an example, and the disclosure shall not be limited thereto. The first entangled quantum state may be obtained by applying the quantum interactions associated with the set of edges, for example, to an initial product state. A cluster state is a special instance of a graph state, where the graph is a lattice, e.g. a two-dimensional or three-dimensional lattice. Further technical details regarding cluster states, and graph states in general, are provided below in section II of "Further aspects".

It shall be understood that the first entangled quantum state is not limited to be a graph state. For example, a quantum state that can be obtained from a graph state by performing single-body operations may also be used. More generally, several families of quantum states can be transformed to different target states via single-body operations, e.g. single-body measurements. The first entangled quantum state can be a quantum state belonging to such a family. In particular, any resource state for (universal) measurement-based quantum computation can be used as a suitable first entangled quantum state. This includes, but is not limited to, topological phases of matter, projected entangled pair states (PEPS) and ground states of strongly correlated systems in two or more dimensions.

The first entangled quantum state 250 may be prepared at an initial phase, e.g. before any quantum protocol realizing a (many-body) quantum operation Oᵢ of the plurality of N quantum operations is performed. The first entangled quantum state 250 may be a default quantum state, also called universal quantum state, that is independent of the quantum operations Oᵢ that are included in the plurality of N quantum operations. The term "independent" means in this context that the first entangled quantum state 250 may at most depend on a size parameter (or a set of such size parameters) of the plurality of N quantum operations (e.g. the total number of primary constituents on which the plurality of N quantum operations acts and/or the total number N of quantum operations Oᵢ included in the plurality of N quantum operations), but may otherwise be independent of the particular choice of the quantum operations Oᵢ that are included in the quantum computation. Stated differently, the first entangled quantum state 250 may be a default quantum state adapted to realize any possible plurality of N quantum operations up to a given value of the size parameter (or the set of size parameters). For example, the first entangled quantum state 250 may be adapted to realize any plurality of N quantum operations where the number N of quantum operations is smaller than a first predetermined value and where the total number of constituents on which the plurality of N quantum operations acts is smaller than a second predetermined value.

While (at least a subset of) the set of auxiliary constituents 110 is in the first entangled quantum state 250, the primary constituents 120 may be in an initial quantum state (e.g. each primary constituent being in the state |0>, or some other elementary quantum state) or in a possibly more complex quantum state that may be the result of a previous portion of the quantum computation. While (at least a subset of) the set of auxiliary constituents 110 is in the first entangled quantum state 250, the quantum state of the primary constituents 120 may be disentangled from the first entangled quantum state 250.

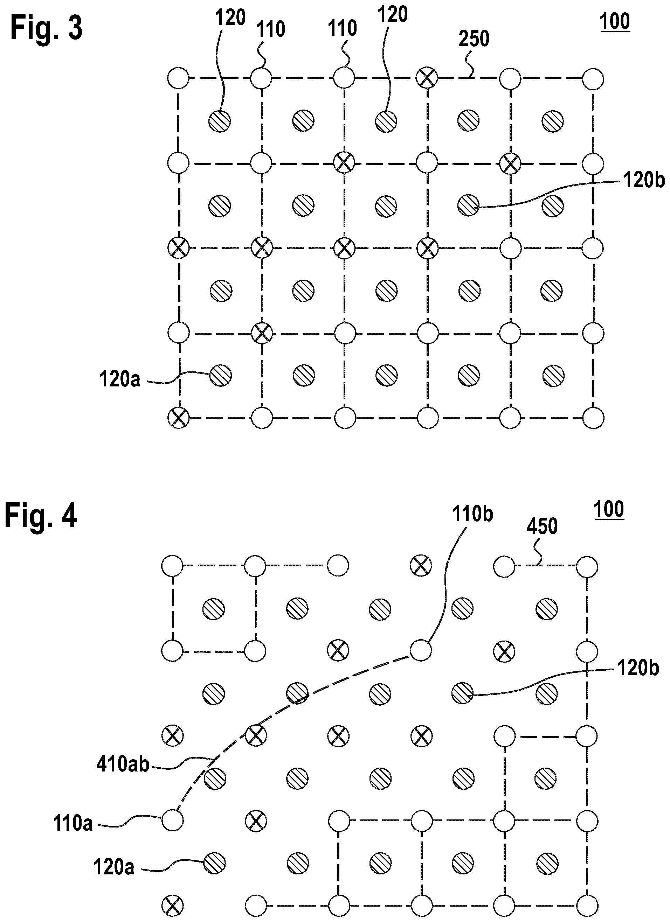

After the first entangled quantum state 250 has been prepared, a plurality of quantum protocols are performed. Each quantum protocol may be configured to realize a respective quantum operation Oᵢ of the plurality of N quantum operations, i.e. a quantum operation acting on two or more primary constituents 120. Each quantum protocol itself includes several quantum operations. With respect to Figs. 3-7, one such quantum protocol, for realizing one of the quantum operations Oᵢ, is described; yet the discussion applies to any one of the quantum protocols considered herein.

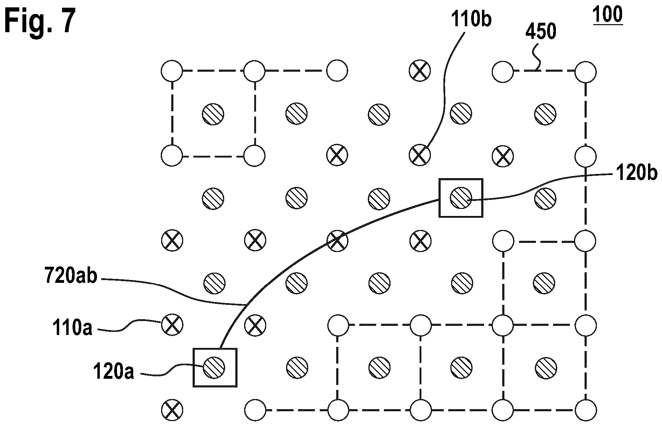

The quantum protocol is configured to realize a quantum operation Oᵢ acting on two or more primary constituents 120. The set of all primary constituents 120 on which a given quantum operation Oᵢ of the quantum computation acts is referred to herein as the domain set of the quantum operation Oᵢ. In the example described with respect to Figs. 3-7, the quantum operation Oᵢ acts on two primary constituents 120a and 120b (see Fig. 7, where the quantum operation Oᵢ is denoted as quantum operation 720ab), so that the domain set of the quantum operation Oᵢ is the set consisting of the primary constituents 120a and 120b.

According to embodiments, at least one quantum operation Oᵢ of the plurality of N quantum operations, and in particular several, or even all, quantum operations of the plurality of N quantum operations, may be (a) long-range quantum operation(s). A quantum operation is considered to be a long-range quantum operation if a maximum constituent distance in the domain set of the quantum operation (i.e. a maximum distance between constituents within the domain set) is greater, in particular much greater, than the interaction cut-off distance of the quantum system. Particularly, in the case of a long-range quantum operation, said maximum constituent distance may be at least two times the interaction cut-off distance, at least five times the interaction cut-off distance, at least ten times the interaction cut-off distance, at least fifty times the interaction cut-off distance, or even larger. A quantum operation may be considered to be a long-range quantum operation if the maximum constituent distance in the domain set of the quantum operation scales faster than a logarithm of the total number of primary constituents in the quantum system. The notion of "scaling" refers to the behavior of large numbers, where only the leading-order terms are relevant. Denoting the maximum constituent distance by Dₘₐₓ and the total number of primary constituents by Mₚᵣᵢₘ, if Dₘₐₓ behaves as the square root, the cubic root or in fact any n-th root of Mₚᵣᵢₘ in the case where Mₚᵣᵢₘ is large, then Dₘₐₓ is considered to scale faster than the logarithm of Mₚᵣᵢₘ.

A distance greater than the interaction cut-off distance is denoted as a "long-range distance" herein for short. A long-range distance may be at least two times the interaction cut-off distance, at least five times the interaction cut-off distance, at least ten times the interaction cut-off distance, at least fifty times the interaction cut-off distance, or even larger. A long-range distance may scale faster than a logarithm of the total number of primary constituents in the quantum system.

For example, the quantum operation 720ab acting on the primary constituents 120a and 120b may be a long-range quantum operation. The distance between the on the primary constituents 120a and 120b may be a long-range distance.

For each primary constituent in the domain set of the quantum operation Oᵢ, an associated auxiliary constituent is considered. In the present example, auxiliary constituents 110a and 110b (see e.g. Fig. 4) associated with primary constituents 120a and 120b, respectively, are considered. An auxiliary constituent (e.g. auxiliary constituent 110a) associated with a primary constituent (e.g. primary constituent 120a) may be disposed sufficiently close to the primary constituent so that the auxiliary constituent may be coupled to the primary constituent by a short-range quantum interaction, or by a small number of short-range interactions. The distance between a primary constituent and the associated auxiliary constituent may be at most a constant number times the interaction-cut-off distance of the quantum system. The constant number may be independent of the total number of constituents of the quantum system, i.e. remaining constant as the total number of constituents is increased.

The auxiliary constituents associated with all primary constituents in the domain set of a quantum operation form an auxiliary set. Thus, in the present example, the auxiliary set associated with the domain set consisting of the primary constituents 120a and 120b is the set consisting of the auxiliary constituents 110a and 110b.

In a first portion of the quantum protocol, an auxiliary entangled quantum state is prepared on the auxiliary set (being the auxiliary constituents 110a and 110b in the present example). The auxiliary entangled quantum state is prepared by performing single-body quantum operations, and in particular only single-body quantum operations, on a subset of the auxiliary constituents of the first entangled quantum state 250. For example, a plurality of single-body measurements may be performed on a set of auxiliary constituents of the first entangled quantum state 250, potentially followed by one or more single-body unitary correction operations acting on one or more respective auxiliary constituents. In an illustrative example, one or more of the single-body measurements may be Pauli measurements (Pauli X, Z and/or Y measurements), yet the disclosure is not limited thereto. Accordingly, the first entangled quantum state 250 is processed by performing single-body quantum operations on a plurality of auxiliary constituents, wherein the processing results in the preparation of an auxiliary entangled quantum state on the auxiliary set. The single-body quantum operations performed on the first entangled quantum state 250 are illustrated in Fig. 3 by the symbol "X" inside some of the auxiliary constituents 110. The resulting auxiliary entangled quantum state 410ab, which is defined on the auxiliary set consisting of the two auxiliary constituents 110a and 110b, is illustrated in Fig. 4.

It shall be understood that the pattern of single-body operations shown in Fig. 3 (cf. the symbols "X" in some of the auxiliary constituents) and in any other figure of the present disclosure is merely illustrative and does not limit the possible configurations of single-body quantum operations that may be performed.

It may be the case that the auxiliary entangled quantum state (e.g. the auxiliary entangled quantum state 410ab) includes only the auxiliary constituents of the auxiliary set, and no other constituents of the quantum system. The auxiliary entangled quantum state may be disentangled from the remaining constituents of the quantum system 100.

The auxiliary entangled quantum state may be prepared by processing the first entangled quantum state 250 by single-body quantum operations only. It may be the case that no many-body quantum operations are performed on the first entangled quantum state 250 for preparing the auxiliary entangled quantum state. In such a case, the process of preparing the auxiliary entangled quantum state may be understood in the sense that a portion of the entanglement initially present in the first entangled quantum state 250 is used up, or consumed, in order to prepare the auxiliary entangled quantum state. The first entangled quantum state 250 functions as an entanglement resource for preparing the auxiliary entangled quantum state from the first entangled quantum state 250.

The auxiliary entangled quantum state may be a highly entangled quantum state. For example, the auxiliary entangled quantum state may be a Bell state (in cases where the auxiliary set consists of two constituents), a Greenberger-Horne-Zeilinger state (in cases where the auxiliary set consists of three constituents), a graph state, or the like.

The number of auxiliary constituents in the auxiliary set may be at least as large as the number of primary constituents of the domain set of the quantum operation Oᵢ that is to be realized by the quantum protocol under consideration. Accordingly, the auxiliary entangled quantum state may include at least as many auxiliary constituents as there are primary constituents included in the domain set. In the present example, the auxiliary set includes a total of two auxiliary constituents (auxiliary constituents 110a and 110b), being equal to the number of primary constituents in the domain set (primary constituents 120a and 120b).

In cases where the quantum operation Oᵢ is a long-range quantum operation, so that the domain set of the quantum operation Oᵢ includes (primary) constituents that are spaced apart from each other by a long-range distance, the auxiliary entangled quantum state may include (auxiliary) constituents that are also spaced apart from each other by a long-range distance. For example, the primary constituents 120a and 120b may be spaced apart from each other by a long-range distance, and the auxiliary constituents 110a and 110b may also be spaced apart from each other by a long-range distance. Accordingly, the auxiliary entangled quantum state 410ab may provide long-range entanglement, which can be made use of to realize the quantum operation Oᵢ.

Further technical details regarding the preparation of an auxiliary entangled quantum state by processing the first entangled quantum state by single-body quantum operations are provided below in section II.1 of "Further aspects".

The auxiliary entangled quantum state 410ab may be used to realize the quantum operation Oᵢ. Specifically, the auxiliary entangled quantum state 410ab may form the basis of a teleportation-like scheme for teleporting the operation Oᵢ onto the primary constituents in the domain set thereof.

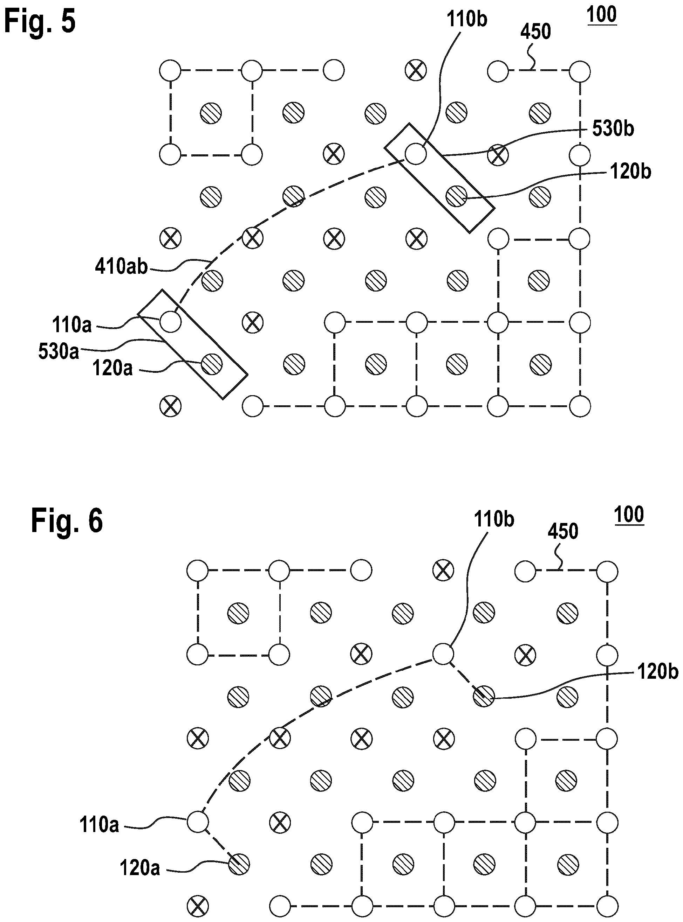

Each primary constituent in the domain set of the quantum operation Oᵢ may be coupled to at least one respective auxiliary constituent of the auxiliary set, particularly by one or more short-range quantum interactions. For example, the primary constituent 120a and the auxiliary constituent 110a may be coupled to each other, and the primary constituent 120b and the auxiliary constituent 110b may be coupled to each other, as illustrated in Fig. 5 by the boxes 530a and 530b, respectively. Coupling the constituents in question may include providing one or more quantum interactions between said constituents, particularly one or more short-range quantum interactions. The coupling may be performed by unitary evolution, by one or more entangling measurements, or by any other type of quantum operation, or any combination thereof. In one illustrative example, each primary constituent in the domain set of the quantum operation Oᵢ may be coupled to a respective auxiliary constituent of the auxiliary set by a controlled-Z operation or a controlled-NOT ("CNOT") operation.

In one example, the aforementioned coupling may be performed after the auxiliary entangled quantum state 410ab has been prepared. The primary constituents in the domain set (e.g. primary constituents 120a and 120b) may be coupled to the auxiliary entangled quantum state. In another example, the coupling may be performed before the auxiliary entangled quantum state 410 is prepared, or even during the preparation of the auxiliary entangled quantum state 410. It may be the case that the preparation of the auxiliary entangled quantum state 410 by processing the first entangled quantum state 250 does not involve quantum operations acting on the auxiliary constituents in the auxiliary set. E.g., for preparing the auxiliary entangled quantum state 410 shown in Fig. 4, it may not be necessary to act on the auxiliary constituents 110a and 110b. Accordingly, the order in which the preparation of the auxiliary entangled quantum state 410ab and the coupling of the constituents 110a/120a and 110b/120b is performed is irrelevant, since the operations in question commute and may be performed in any order.

The preparation of the auxiliary entangled quantum state 410ab and the coupling of each primary constituent in the domain set of the quantum operation Oᵢ to at least one associated auxiliary constituent of the auxiliary set may result in an enlarged auxiliary entangled quantum state that includes the auxiliary constituents in the auxiliary set (auxiliary constituents 110a and 110b) as well as the primary constituents in the domain set (primary constituents 120a and 120b). Said enlarged auxiliary entangled quantum state is illustrated schematically in Fig. 6 by the dotted line connecting constituents 120a, 110a, 110b and 120b. The enlarged auxiliary entangled quantum state establishes entanglement between the primary constituents in the domain set of the quantum operation Oᵢ - in the present example, the primary constituents 120a and 120b. As described above, the primary constituents in the domain set may potentially be spaced apart from each other by a long-range distance. Nevertheless, the enlarged auxiliary entangled quantum state, which connects the primary constituents in question, has been prepared by performing only single-body quantum operations (for preparing the auxiliary entangled quantum state 410ab from the first entangled quantum state 250) and a small number of short-range quantum operations (namely, the quantum operations 530a and 530b used for coupling the primary constituents in the domain set to the associated auxiliary constituents of the auxiliary set). In the present context, the qualifier "small" can be understood to mean an amount that does not scale (i.e. a constant amount), or scales at most logarithmically, with the total number of constituents in the quantum system.

After the enlarged auxiliary entangled quantum state has been prepared, one or more measurements, in particular single-body measurements, may be performed on one or more constituents of the enlarged auxiliary entangled quantum state, in other words one or more primary constituents in the domain set and/or one or more auxiliary constituents in the auxiliary set. For example, the auxiliary constituents 110a and 110b may each be measured, as illustrated in Fig. 7 (by the symbols "X"). The measurements may disentangle the auxiliary constituents in the auxiliary set from the primary constituents in the domain set, thereby destroying the entanglement between the auxiliary constituents in the auxiliary set and effectively transferring ("teleporting") the entanglement to said primary constituents in the form of a quantum operation acting on said primary constituents.

In some examples, it may be beneficial to perform one or more correction operators on one or more unmeasured constituents (e.g. on the primary constituents 120a and 120b), to account for the fact that some measurement outcomes may result in the application of the desired quantum operation only up to an undesired (e.g. single-body) quantum operation. The latter "error" can be removed by applying a suitable correction operation (or multiple correction operations). In other words, a correction operation compensates for an erroneous quantum operation that is applied if an undesired measurement outcome is obtained. In some instances, a correction operation may also be applied between two measurements, and the choice of measurement operator of a future measurement may depend on whether a correction operator was applied previously ("adaptive measurement"). Accordingly, irrespective of the measurement outcome(s) that is/are obtained, the desired quantum operation may be applied on the domain set. It is noted that the application of error operations is optional and may not always be necessary, e.g. in case where the undesired measurement outcomes have a sufficiently small probability. Further, in some instances, the application of error operations may be postponed to a later stage of the computation.

The application of the quantum operation Oᵢ is illustrated in Fig. 7 as the quantum operation 720ab, which is applied to the primary constituents 120a and 120b, i.e. the constituents forming the domain set of the quantum operation in question.

In the above example, the coupling of the primary constituents in the domain set to the associated auxiliary constituents in the auxiliary set, resulting in the enlarged auxiliary entangled quantum state, and the subsequent measurement(s) performed on the enlarged auxiliary entangled quantum state were described as separate steps, where the measurement(s) is/are performed after the coupling. The disclosure is not limited to this order of the operations. For example, a measurement of a constituent (e.g. measurement of auxiliary constituent 110a) may be performed simultaneously with a coupling of other constituents (e.g. coupling of auxiliary constituent 110b with primary constituent 120b). Further, the coupling and the measuring need not even be separate steps but may be performed jointly as a single operation. For example, instead of coupling the primary constituent 120a to the auxiliary constituent 110a and thereafter measuring the auxiliary constituent 110a by performing a single-body measurement of the auxiliary constituent 110, a single two-body measurement may be performed on the auxiliary constituents 110a and 120a which is equivalent to a combination of the mentioned coupling and single-body measurement. In other words, a two-body measurement may be performed which realizes the coupling between the constituents in question.

Further technical details regarding the realization of a quantum operation using an auxiliary entangled quantum state are provided below in section II.2 of "Further aspects".

In light of the above, the above-described quantum protocol realizes a quantum operation Oᵢ, which may be a long-range quantum operation Oᵢ, acting on two or more primary constituents, by starting out from the first entangled quantum state 250 and subsequently performing single-body quantum operations and a small number (e.g. constant or having at most a logarithmic scaling with the total number of constituents) of short-range quantum interactions.

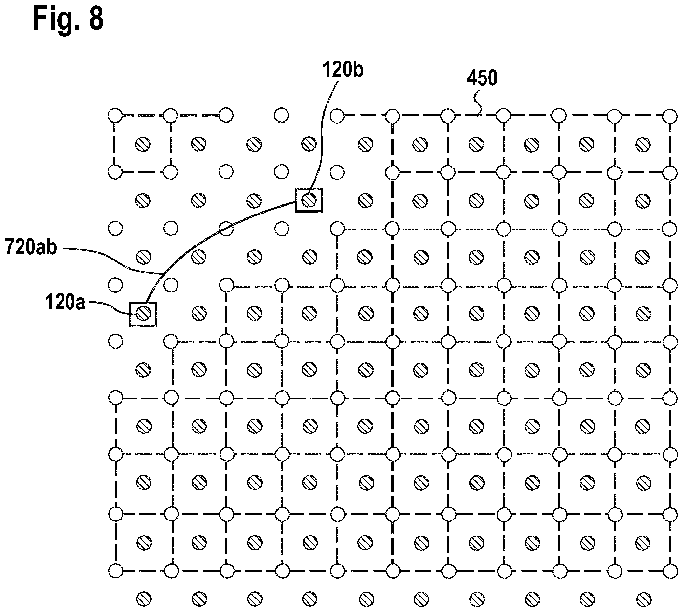

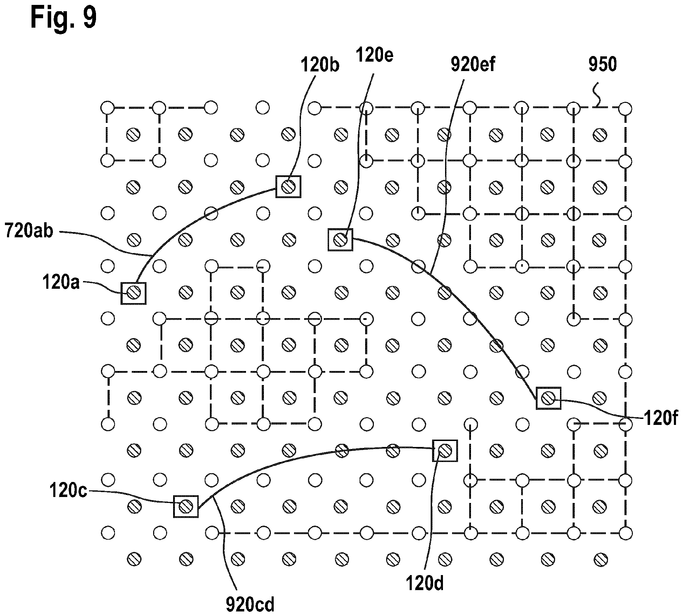

In the same manner, a plurality of quantum protocols may be performed, each realizing a corresponding (many-body) quantum operation Oᵢ of the plurality of N quantum operations, wherein each, or at least a subset, of the N quantum operations may be a long-range quantum operation. For example, as illustrated in Fig. 8, after a first quantum operation 720ab has been realized by a first quantum protocol as described above, only a portion of the first entangled quantum state 250 may have been consumed by performing single-body measurements on a subset of the auxiliary constituents. The remaining (i.e. unmeasured) auxiliary constituents are in a quantum state 450, being the quantum state resulting from processing the first entangled quantum state 250 in the first quantum protocol. The quantum state 450 may be an entangled quantum state that can in turn be used, similarly to the first entangled quantum state 250, as a resource for realizing one or more further quantum operations Oⱼ of the plurality of N quantum operations. Accordingly, a second quantum protocol may be performed using the quantum state 450 to realize a second, potentially long-range, quantum operation Oⱼ of the plurality of N quantum operations, indicated in Fig. 9 as a quantum operation 920cd. The second quantum operation also has domain set, in the present example consisting of the primary constituents 120c and 120d, being the constituents on which the quantum operation 920cd acts. The second quantum protocol for realizing the quantum operation 920cd is fully analogous to the above-described quantum protocol realizing the quantum operation 720ab, and the description will not be repeated here.

Likewise, after the quantum operation 920cd has been realized by the second quantum protocol, the quantum state 450 may have been partially consumed by single-body measurements, and a remaining (unmeasured) portion of the auxiliary constituents may be in a further entangled quantum state. Said further entangled quantum state may in turn be used to perform a third quantum protocol realizing a third, potentially long-range, quantum operation 920ef acting on primary constituents 120e and 120f. After the third quantum protocol, the first entangled quantum state 250 may have been transformed, due to the single-body measurements, in an entangled quantum state 950 as illustrated in Fig. 9. The entangled quantum state 950 may be further processed in a similar manner to realize further quantum operations of the plurality of N quantum operations.

Accordingly, a plurality of N quantum protocols may be performed one after the other, each quantum protocol starting out from the first entangled quantum state (e.g. in the case of the first quantum protocol for realizing the quantum operation 720ab) or from a partially processed first entangled quantum state, i.e. a quantum state resulting from processing the first entangled quantum state 250 in one or more previous quantum protocols (in the case of, e.g., the quantum protocols for realizing the quantum operations 920cd and 920ef, or any quantum protocol taking place thereafter). Each of the N quantum protocols may realize a corresponding quantum operation of the plurality of N quantum operations.

It may be the case that each quantum protocol acts on a set of constituents - including both primary constituents and auxiliary constituents - such that the respective sets of constituents acted upon by the different quantum protocols are mutually disjoint sets (wherein two sets of constituents are considered disjoint if the sets do not have any common constituents). In such a case, the quantum operations performed in the different quantum protocols commute with each other, and may hence be performed in parallel. This means that there is no need to start, e.g., the second quantum protocol (for realizing the quantum operation 920cd) only after the first quantum protocol (for realizing the quantum operation 720ab) has been concluded, but that these quantum protocols may be performed simultaneously. The same is true for any set of quantum protocols that act on mutually disjoint sets of constituents.

If, for example, the second quantum protocol (for realizing the quantum operation 920cd) is performed in parallel with the first quantum protocol (for realizing the quantum operation 720ab), this means that the second quantum protocol does not start from a partially processed first entangled quantum state, i.e. the quantum state 450, but starts from the first entangled quantum state 250, as does the first quantum protocol. In other words, it may be the case that several, or even all, of the quantum protocols start out from the first entangled quantum state 250, and that the quantum protocols in question are performed in parallel.

Whereas the examples shown in the figures involve quantum operations Oᵢ being two-body operations, i.e. quantum operations acting on two constituents, this is merely for clarity of exposition and in order not to overload the figures. The present discussion equally applies to quantum operations that act on three or more constituents. In such cases, the domain set of the quantum operation includes three or more primary constituents and the auxiliary entangled quantum state includes three or more auxiliary constituents, and the remainder of the quantum protocol (coupling of the primary constituents in the domain set to associated auxiliary constituents in the auxiliary set, measurements and application of potential correction operators) is extended straightforwardly to this situation.

As described above, a quantum protocol may include a plurality of single-body quantum operations, in particular single-body measurements, for processing the first entangled quantum state 250 (or a partially processed first entangled quantum state) to prepare an auxiliary entangled quantum state on a subset of the auxiliary constituents. A single-body measurement, when performed on a constituent, may disentangle the constituent from the remaining constituents of the quantum system. Accordingly, a plurality of single-body measurements that are performed as part of a quantum protocol may destroy some of the entanglement present in the first entangled quantum state 250 (or the partially processed first entangled quantum state). Particularly, a first quantum protocol for realizing a first quantum operation Oᵢ of the plurality of N quantum operations may involve a set of auxiliary constituents that are measured along a path (called "measurement path" herein), thus causing the entanglement of the first entangled quantum state 250 (or of a partially processed first entangled quantum state) to be destroyed along the path in question. In view of this, it may be challenging to realize a second quantum operation Oⱼ by a second quantum protocol in a situation where the corresponding measurement path of the second quantum protocol would cross the measurement path of the first quantum protocol, since the disentangled constituents near the crossing of the two paths could hinder the proper execution of the second quantum protocol, e.g. may render it impossible to prepare a suitable auxiliary quantum state as part of the second quantum protocol.

Certain choices of the measurement paths, called entanglement-structure-preserving measurement paths herein, can resolve the above issue. In the case of an entanglement-structure-preserving measurement path, the measured constituents are still disentangled from the remaining constituents (as is always the case, at least with projective measurements), yet the entanglement structure of the remaining quantum state, i.e. the partially processed first entangled quantum state obtained after the single-body measurements, is substantially the same as the entanglement structure of the first entangled quantum state that was started from. For example, if the first entangled quantum state is a two-dimensional cluster state (i.e. a graph state corresponding to a two-dimensional lattice), then the partially processed first entangled quantum state, after a set of measurements forming an entanglement-structure-preserving measurement path has been performed, is again a (smaller) two-dimensional cluster state on the unmeasured auxiliary constituents (up to the potential formation of small holes in the cluster state, which are however harmless) - that is to say, a quantum state associated with the same type of graph as the first entangled quantum state, apart from the auxiliary constituents that have been measured out. Accordingly, the partially processed first entangled quantum state may then be used in substantially the same manner as the first entangled quantum state for performing subsequent quantum protocols, irrespective of whether the measurement paths cross.

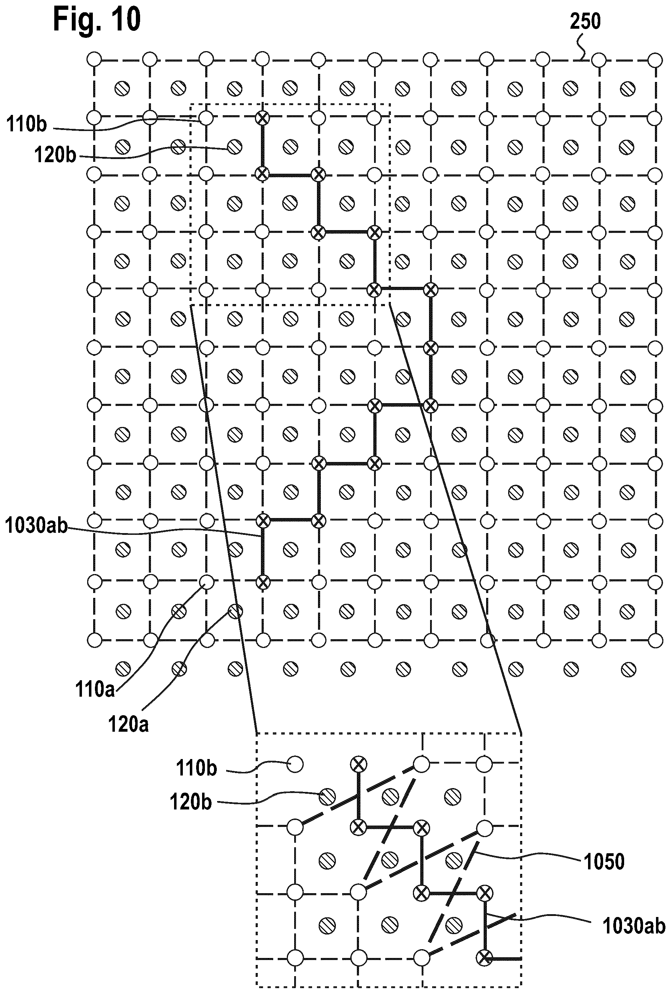

Fig. 10 illustrates the notion of entanglement-structure-preserving measurement paths. The quantum protocol under consideration is configured for realizing a quantum operation acting on the primary constituents 120a and 120b. The quantum protocol includes the preparation of an auxiliary entangled quantum state (not shown) on the auxiliary constituents 110a and 110b. The auxiliary entangled quantum state is prepared from the first entangled quantum state 250 by performing single-body quantum operations, more specifically single-body measurements, on a plurality of auxiliary constituents. The single-body measurements are illustrated in Fig. 10 by the symbol "X" in the auxiliary constituents in question (being a schematic, non-limiting illustration of a potential measurement pattern). At least a subset of the measured plurality of auxiliary constituents defines a path 1030ab. The path 1030ab is a measurement path.

A measurement path, such as the path 1030ab in Fig. 10, or the paths 1110ab and 1110cd in Fig. 11, or any other measurement path, is a path defined by a set of measured constituents, in particular a set of measured auxiliary constituents. The measurement path may include a set of nodes, where each node in the set of nodes corresponds to a constituent of the set of measured constituents. The measurement path may include a set of edges obtained by connecting consecutive nodes of the set of nodes with each other, as illustrated in Fig. 10, where the path 1030 is represented by the thick solid line connecting the auxiliary constituents marked by "X".

A measurement path may have a first end at a first measured constituent, particularly a first measured auxiliary constituent, of the measurement path. The measurement path may have a second end at a second measured constituent, particularly a second measured auxiliary constituent, of the measurement path. The measurement path may connect the first measured constituent to the second measured constituent or, equivalently, may connect the second measured constituent to the first measured constituent. The first end of the measurement path, i.e. the first measured constituent, may be adjacent to (or within the interaction cut-off distance from) a first auxiliary constituent of the auxiliary set associated with the quantum operation that is to be realized. The second end of the measurement path, i.e. the second measured constituent, may be adjacent to (or within the interaction cut-off distance from) a second auxiliary constituent of said auxiliary set. For example, with respect to the path 1030ab in Fig. 10, the first measured constituent is the auxiliary constituent "X" that is adjacent to the auxiliary constituent 110a, and the second measured constituent is the auxiliary constituent "X" that is adjacent to the auxiliary constituent 110b.For the sake of concreteness, in the present example the first entangled quantum state 250 may be considered to be a two-dimensional cluster state. Each auxiliary constituent corresponds to a node of a two-dimensional lattice. The edges of the two-dimensional lattice, shown in Fig. 10 as dashed lines, represent the entanglement present in the two-dimensional cluster state. More specifically, as described above, the edges of the two-dimensional lattice represent controlled-Z gates that can be used to generate the two-dimensional cluster state from a product state. In addition, the edges reflect the structure of Pauli stabilizer operators characterizing the two-dimensional cluster state as a quantum stabilizer state.

If a measurement path such as the path 1030 has a particular geometrical structure (and involves suitable choices for the single-body observables that are being measured), the partially processed first entangled quantum state obtained after the measurements is again a two-dimensional cluster state. In such a case, the measurement path is said to be entanglement-structure-preserving. The path 1030 shown in Fig. 10 schematically represents an entanglement-structure-preserving measurement path with the purpose of illustrating some of the properties thereof, but the disclosure is not limited thereto.

As illustrated in Fig. 10, the path 1030ab is a composition of a first portion and a second portion. The first portion starts in an auxiliary constituent adjacent to the auxiliary constituent 110a and forms a first zig-zag trajectory that generally extends in a first diagonal direction. The second portion forms a second zig-zag trajectory that generally extends in a second diagonal direction different from the first diagonal direction and ends in an auxiliary constituent adjacent to the auxiliary constituent 110b. The constituents along the path 1030ab may be measured in the X basis, where X denotes a Pauli σₓ observable.

As illustrated in the bottom portion of Fig. 10, the measured constituents (marked by "X") are disentangled from the quantum system. The partially processed first entangled quantum state on the remaining auxiliary constituents is again a graph state including edges 1050 between the two groups of constituents on both sides of the path 1030ab. The edges 1050 are shaped as a "zipper" structure that connects the two groups of constituents with each other. The resulting partially processed first entangled quantum state is again a two-dimensional cluster state on the remaining (i.e. unmeasured) constituents.

It shall be understood that an entanglement-structure-preserving measurement path need not include two portions along opposite diagonal directions such as the path 1030ab. For example, a measurement path consisting only of the first portion or only of the second portion, i.e. a single diagonal direction (when measured in a suitable basis, e.g. the X basis), is also entanglement-structure-preserving, since the "zipper" structure shown in Fig. 10 will also arise in such a case. Likewise, a measurement path involving more than two portions along respective diagonal directions is also entanglement-structure-preserving.

Figs. 11-13 illustrate two entanglement-structure-preserving paths that cross each other, and the two quantum operations resulting from the respective quantum protocols.

A first quantum protocol is configured to realize a first quantum operation acting on primary constituents 120a and 120b. For preparing a first auxiliary entangled quantum state on auxiliary constituents 110a and 110b, a first plurality of auxiliary constituents is measured along a first path 1110ab, being an entanglement-structure-preserving measurement path as described above. The first path includes a first set of nodes, where each node corresponds to a measured auxiliary constituent, and a first set of edges connecting consecutive nodes, thereby forming the first path 1110ab as indicated in Fig. 11.

A second quantum protocol is configured to realize a second quantum operation acting on primary constituents 120c and 120d. For preparing a second auxiliary entangled quantum state on auxiliary constituents 110c and 110d, a second plurality of auxiliary constituents is measured along a second path 1110cd, being an entanglement-structure-preserving measurement path as described above. The second path includes a second set of nodes, where each node corresponds to a measured auxiliary constituent, and a second set of edges connecting consecutive nodes, thereby forming the second path 1110cd as indicated in Fig. 11. The second path 1110cd crosses the first path 1110ab. More specifically, as illustrated, an edge of the second path 1110cd crosses an edge of the first path 1110ab. Yet, since both paths are entanglement-structure-preserving, the crossing of the paths does not prevent a successful execution of the respective quantum protocols, as described above.

Accordingly, as illustrated in Fig. 12, a first auxiliary entangled quantum state 1210ab and a second auxiliary entangled quantum state 1210cd may be prepared by performing the measurements along the first path 1110ab and the second path 1110cd, respectively. The primary constituents 120a and 120b may be coupled to the auxiliary constituents 110a and 110b, respectively, and the primary constituents 120c and 120d may be coupled to the auxiliary constituents 110c and 110d, respectively, as also illustrated in Fig. 12.

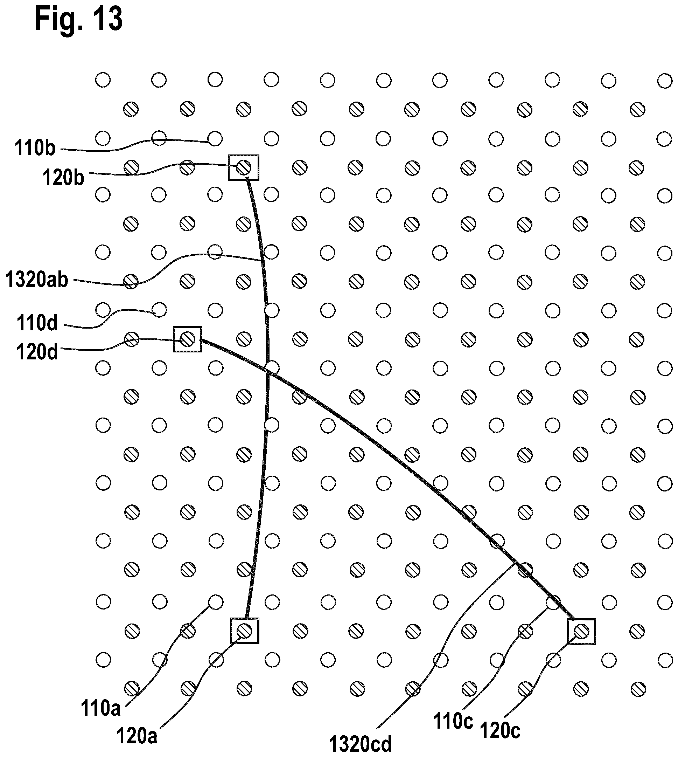

After a final set of measurements, e.g. on the auxiliary constituents 110a, 110b, 110c and 110d, a first quantum operation 1320ab acting on primary constituents 120a and 120b, and a second quantum operation 1320cd acting on primary constituents 120c and 120d may be realized, as shown in Fig. 13. As illustrated, the first quantum operation 1320ab and the second quantum operation 1320cd "cross" each other in the manner shown in Fig. 13.

In Figs. 12-13, the partially processed first entangled quantum state has not been drawn in order not to overload the figures.

The example illustrated in Figs. 11-13 involves two-body quantum operations, yet this merely for the sake of ease of exposition and shall not be construed as a limitation. The discussion can be straightforwardly generalized to quantum operations acting on three or more constituents.

It shall be understood that the entanglement-structure-preserving measurement paths and the associated patterns of single-body measurements shown in Figs. 10 and 11 are schematic illustrations. Further technical details regarding entanglement-structure-preserving measurement paths are provided below in section II.1 of "Further aspects".

In view of the above, a plurality of N quantum operations can be realized, where the N quantum operations may form a pattern of long-range or short-range operations that may or may not cross each other in an essentially arbitrary fashion, especially if entanglement-structure-preserving measurement paths are used. The present method thereby offers a great flexibility as regards the pattern of quantum operations that can be realized.

Particularly, the present approach enables the realization of a large number of quantum operations, where "large" means that N (i.e. the number of quantum operations) can be a large fraction of the total number M of constituents of the first entangled quantum state. Specifically, N may have a scaling greater than a logarithmic scaling with M, particularly a scaling of at least M^{1/q} for some number q ≥ 2. For example, if the first entangled quantum state is a cluster state associated with an m times m two-dimensional lattice, the number N may scale as n, corresponding to a scaling of M^{1/2}. The notion of "scaling" refers to the behavior of large numbers, where only the leading-order terms are relevant (e.g. a number N given by the expression N = M^{1/2} + log(M) is said to scale as M^{1/2}, since the log(M) term increases much more slowly than the leading-order term M^{1/2} in as M increases). Thus, the present method allows the realization of a large number of quantum operations, including a plurality of long-range quantum operations, according to an arbitrary pattern.

Further, as described above, the N quantum protocols may act on mutually disjoint portions of the quantum system 100, and can thus be performed in parallel. Accordingly, embodiments described herein allow realizing a large number of quantum operations in parallel, where the N quantum operations may form a pattern of long-range or short-range operations that may or may not cross each other in an essentially arbitrary fashion. By performing the quantum operations in parallel, a reduced computational depth of the quantum computation can be achieved.

After the plurality of N quantum operations have been realized by the N respective quantum protocols, especially if the number N is large, it may be the case that the resulting partially processed first entangled quantum state is no longer suitable to realize further quantum operations, since substantially all of the entanglement of the first entangled quantum state has been consumed. In such a case, the whole procedure may be repeated. That is to say, a second entangled quantum state (which may be the same quantum state as the first entangled quantum state, e.g. again a cluster state) may be prepared on the auxiliary constituents, and subsequently a plurality of N' further quantum protocols for realizing a plurality of N' further quantum operations on the primary constituents may be performed in the same manner as the N quantum protocols discussed in the foregoing. By continuing in this manner, each time preparing an entangled quantum state and performing quantum protocols thereon, an arbitrary quantum computation can be performed.

The above-described method ("first method") involves the preparation of a first entangled quantum state 250 as an initial phase of the procedure. As described above, the first entangled quantum state is processed by single-body quantum operations, in particular single-body measurements, to generate auxiliary entangled quantum states on sets of auxiliary constituents, and the auxiliary entangled quantum states are in turn used for realizing the associated quantum operations on sets of primary constituents. In the following an alternative approach is described ("second method"), which does not involve the preparation of a first entangled quantum state, but which nevertheless provides several of the same advantages as the first method.

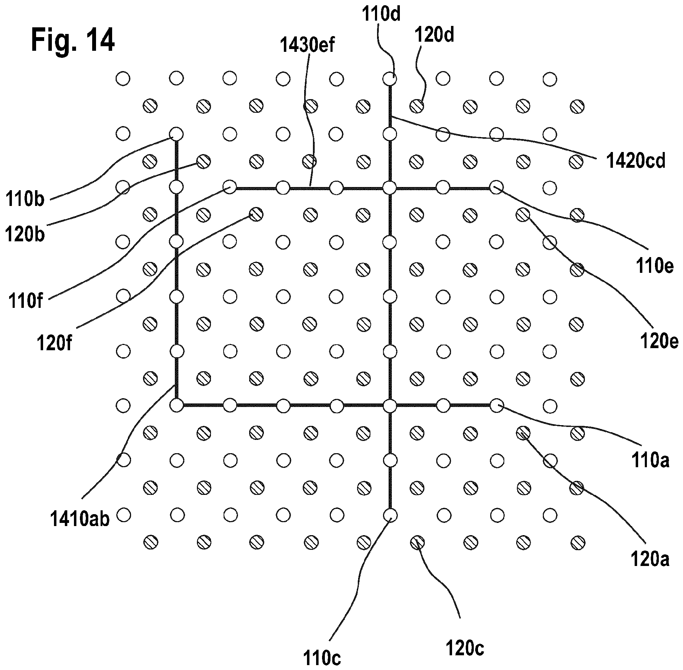

Fig. 14 schematically shows a same kind of quantum system as considered above, including a set of primary constituents and a set of auxiliary constituents. The primary constituents and the auxiliary constituents are shown in a two-dimensional lattice arrangement, yet (as also described with respect to the first method) this is only one possible example and the disclosure is not limited thereto.

Initially, the auxiliary constituents may be provided in an initial quantum state, which may be a non-entangled quantum state. For example, each auxiliary constituent may be in the quantum state |0>, or the quantum state |+> = (|0>+|1>)/√2, or in any other single-body quantum state (and, as in the first method, the primary constituents will typically be in some quantum state that results from previous quantum operations that have been performed on the primary constituents, e.g. in a previous application of the procedures described herein). Accordingly, the initial phase considered here is different from the method described above, where the auxiliary constituents were initially provided in the first entangled quantum state 250, e.g. a cluster state.

As before, it is considered to realize a plurality of N quantum operations on respective sets of primary constituents, wherein each of the N quantum operations is realized by an associated quantum protocol. For example, with respect to Fig. 14, it is considered to realize a first quantum operation acting on primary constituents 120a and 120b, a second quantum operation acting on primary constituents 120c and 120d, and a third quantum operation acting on primary constituents 120e and 120f. As before, two-body quantum operations are considered for the sake of clarity of exposition and in order not to overload the figures, yet the disclosure is not limited thereto.

In order to realize the plurality of N quantum operations on the respective sets of primary constituents, it is again considered to prepare an auxiliary entangled quantum state (e.g. a Bell state, GHZ state, or the like) on the auxiliary set of auxiliary constituents associated with each of the N quantum operations. In the example shown in Fig. 14, it is considered to prepare a first auxiliary entangled quantum state on auxiliary constituents 110a and 110b (where the latter constituents form a first auxiliary set), a second auxiliary entangled quantum state on auxiliary constituents 110c and 110d (forming a second auxiliary set), and a third auxiliary entangled quantum state on auxiliary constituents 110e and 110f (forming a third auxiliary set).

For each auxiliary set, a path of additional auxiliary constituents that connects the two auxiliary constituents in the auxiliary set is considered. The path includes auxiliary constituents that will be processed in other to generate the associated auxiliary quantum state. The path may include portions extending in different directions. For example, as shown in Fig. 14, a first path 1410ab having a first path portion extending in a first direction (i.e. the horizontal direction in Fig. 14) and a second path portion extending in a second direction (i.e. the vertical direction in Fig. 14) connects the auxiliary constituents 110a and 110b. A second path 1420cd, which extends fully in the second (vertical) direction, connects the auxiliary constituents 110c and 110d. A third path 1430ef, which extends fully in the first (horizontal) direction, connects the auxiliary constituents 110e and 110f. Note that the first path 1410ab and the third path 1430ef do not cross each other, and that the second path 1420cd crosses both the first path 1410ab and the third path 1430ef. The first, second and third path as shown in Fig. 14 are merely examples, and the disclosure shall not be limited thereto. Particularly, similar to the first method described above involving the preparation of a first entangled quantum state, paths of any shape may be considered, the number of paths may be arbitrary, and the paths may cross or not cross each other in an arbitrary manner as well.

The aforementioned paths indicate auxiliary constituents that will be processed in order to prepare the respective auxiliary entangled quantum states. The auxiliary constituents along any given path will be entangled with each other and subsequently measured in order to prepare the associated auxiliary entangled quantum state. Yet, if there are crossings between the paths, as is the case in Fig. 14, the procedure will be divided in two rounds by splitting up the paths into path portions that do not involve any crossings.

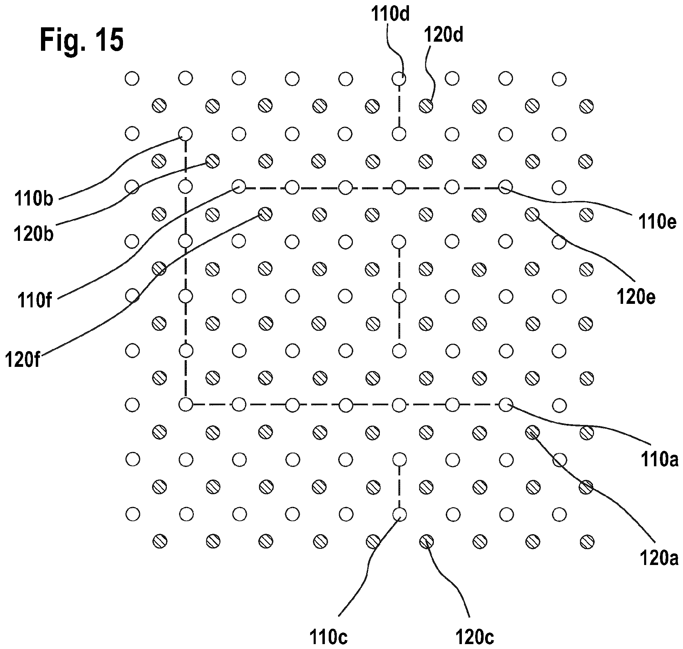

In a first round, a first collection of path portions is considered which does not involve any crossings. There are many ways in which such a first collection can be defined. In one example, it may be considered that each path (e.g. in a two-dimensional lattice layout of the constituents as shown in Fig. 14) consists of concatenations of elementary line segments that are either "horizontal" or "vertical", where each elementary line segment extends between two adjacent auxiliary constituents. The first collection of path portions may then consist of the path portions formed by (i) all horizontal elementary line segments of all paths under consideration, and (ii) only those vertical elementary line segments that do not intersect with any horizontal elementary line segment. It is further noted that the notion of a "path portion" being included in the first collection also allows that an entire path is included therein, if the conditions (i) and (ii) are fulfilled for the entire path in question. With respect to the present example, the resulting first collection of path portions is shown in Fig. 15 by the dashed lines. The first collection includes the first path and the third path entirely (since the first path consists of a horizontal path portion and a vertical path portion that does not cross any other path, and since the third path is a purely horizontal path), and includes three separate path portions of the second path, wherein each of the three path portions consists of vertical elementary line segments that cross neither the first path nor the third path.

Then, adjacent auxiliary constituents along each path portion of the first collection are entangled with each other. For example, an entangling quantum operation (e.g., a controlled-Z gate, a CNOT gate, and the like) may be applied to each pair of adjacent (i.e. neighboring) auxiliary constituents that are connected by a (vertical or horizontal) elementary line segment of a path portion in the first collection. With respect to Fig. 15, this means that an entangling quantum operation may be applied to any pair of adjacent auxiliary constituents along each of the dashed lines shown in Fig. 15. Particularly, mutually commuting entangling quantum operations may be performed (e.g. controlled-Z gates, which may be applied to auxiliary constituents prepared in the state |+> = (|0>+|1>)/√2), such that all entangling quantum operations may be applied in parallel, thus advantageously allowing for the computational depth to remain small.

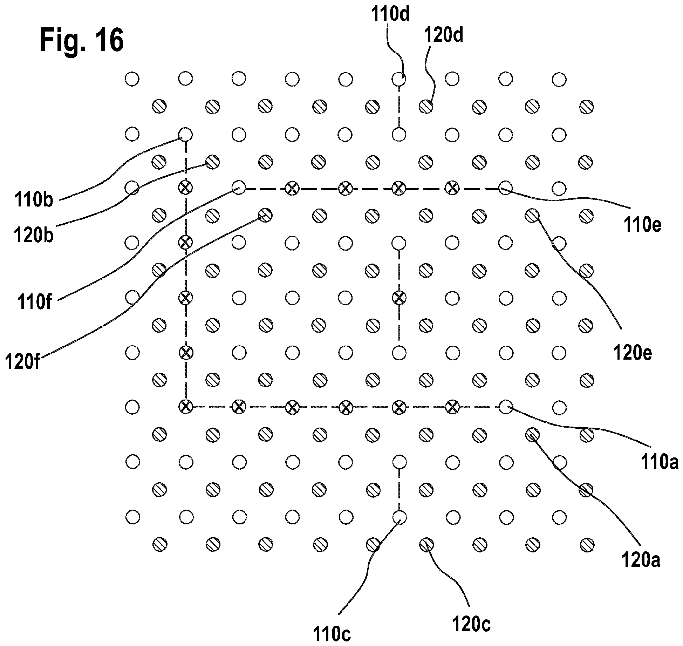

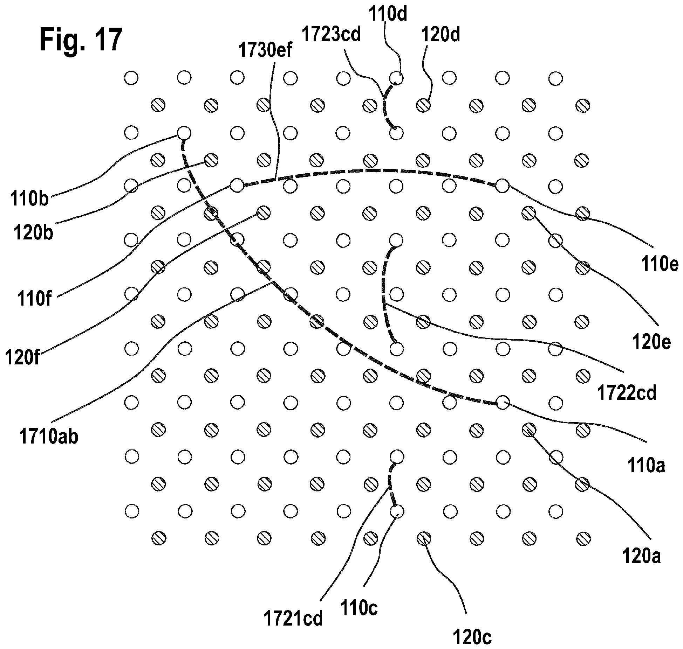

After the entangling quantum operations have been applied (and still as a part of the first round), a subset of the auxiliary constituents of the path portions in the first collection are measured, as illustrated in Fig. 16, where the measured constituents are indicated with an "X", as before. Since the measurements are performed on different constituents (and assuming no correction operations are performed between the measurements), all measurements can be performed in parallel. Suitable single-body measurements can be selected (e.g. Pauli Y measurements, if controlled-Z gates were used as entangling quantum operations) that result in the generation of an entangled quantum state between the auxiliary constituents located at the two endpoints of each path portion in the first collection. For example, as illustrated in Fig. 17, entangled quantum states 1710ab, 1721cd, 1722cd, 1723cd and 1730ef (which may, for example, all be Bell states) are obtained in this manner.

The entangled quantum states 1710ab and 1730ef are already the desired auxiliary entangled quantum states between the auxiliary constituents 110a-b and 110e-f, respectively. With respect to auxiliary constituents 110c and 110d, the preparation of the associated auxiliary entangled quantum state has not yet been completed, since so far only the states 1721cd, 1722cd and 1723cd associated with the three path portions of the second path in the second collection have been prepared.

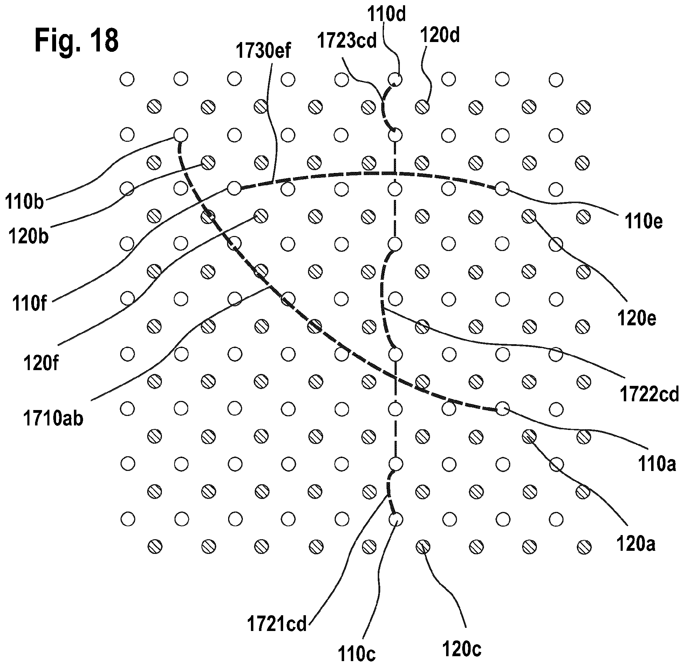

In a second round, the quantum states 1721cd, 1722cd and 1723cd (or more generally, any entangled quantum states associated with path portions resulting from splitting up a path due to the presence of one or more path crossings) are coupled to each other by performing further entangling quantum operations. The further entangling quantum operations may again mutually commute (e.g. again controlled-Z gates, yet the disclosure is not limited thereto), so that the further entangling quantum operations can again be performed in parallel, thus allowing the computational depth to remain small. In order to determine the further entangling quantum operations that are to be performed, a second collection of path portions is considered, the second collection consisting of all path portions that were not part of the first collection. With respect to the present example, the path portions of the second collection are shown in Fig. 18 by the dashed vertical lines, being the path portions of the second path 1420cd that were not part of the first collection. The further entangling quantum operations may be performed between adjacent auxiliary constituents along the path portions of the second collection, i.e. along the dashed vertical lines in Fig. 18. Accordingly, the further entangling quantum operations couple the quantum states 1721cd, 1722cd and 1723cd to each other.

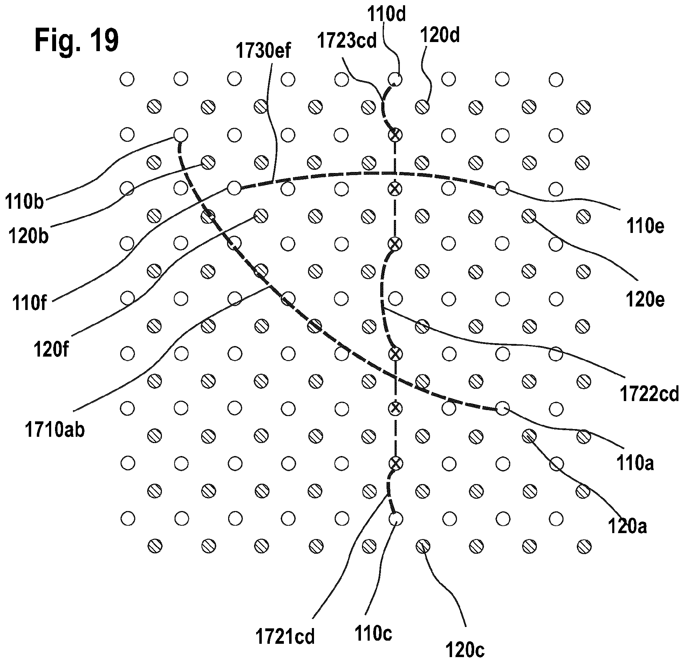

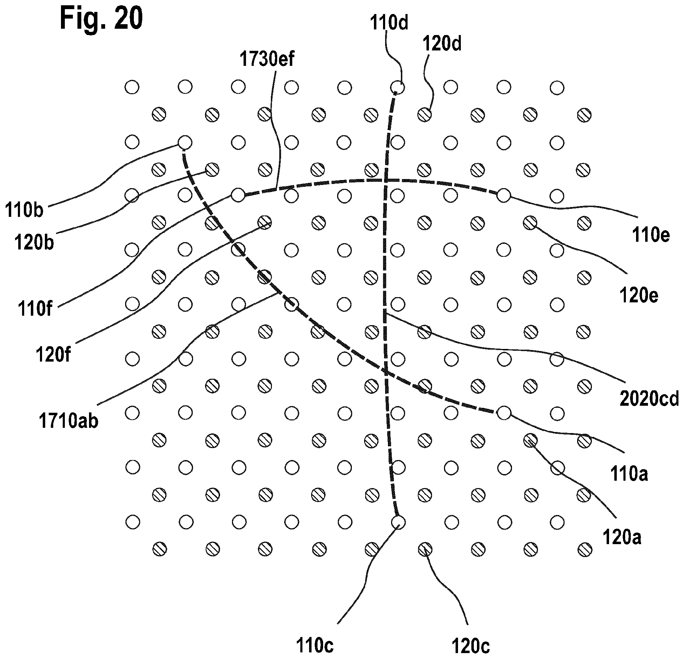

By virtue of the further entangling quantum operations acting on the quantum states 1721cd, 1722cd and 1723cd, an entangled quantum state is prepared that involves the auxiliary constituents 110c and 110d and the additional auxiliary constituents disposed along the second path 1420cd. Still as a part of the second round, the additional auxiliary constituents can be measured out by performing single-body measurements (e.g. again Pauli Y measurements), as indicated in Fig. 19 by "X", in order to generate the desired auxiliary entangled quantum state 2020cd (e.g. a Bell state) on the auxiliary constituents 110c and 110d, as shown in Fig. 20.

Once the auxiliary entangled quantum states 1710ab, 2020cd and 1730ef have been prepared, the second method may continue in the same manner as the first method described above. That is to say, each auxiliary entangled quantum state may be used to realize a respective quantum operation of the plurality of N quantum operations acting on the primary constituents.

Thus, the second method involves two rounds of operations for preparing the N auxiliary entangled quantum states associated with the plurality of N quantum operations, where each round includes entangling operations and single-body measurements. In comparison, the first method described above involves the preparation of the first entangled quantum state at an initial phase, wherein each auxiliary entangled quantum state can be prepared directly in a single round by performing single-body operations only, and wherein all N auxiliary entangled quantum states can be prepared in parallel. Yet both methods perform similarly as regards computational depth, since the two rounds of the second method involve a difference of only a factor two with respect to the first method, so that the computational depth of the second method also remains very small (and even constant).

Further, like the first method, the second method allows realizing a plurality of N quantum operations, where the N quantum operations may form a pattern of long-range or short-range operations that may or may not cross each other in an essentially arbitrary fashion, and where N may be large. The second method thereby also offers a great flexibility as regards the pattern of quantum operations that can be realized. Further technical details regarding the second method are provided below in section V of "Further aspects".

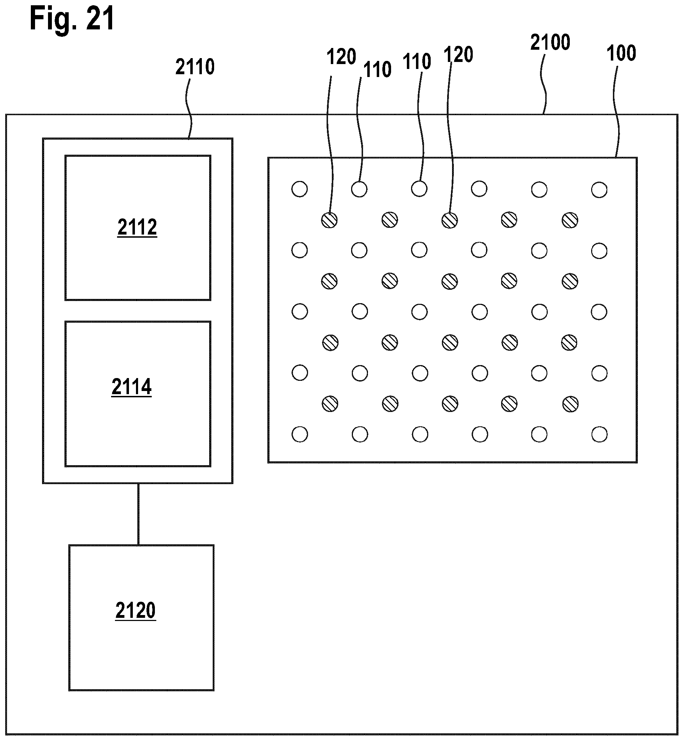

Fig. 21 shows a quantum computer 2000. The quantum computer 2100 includes a quantum system 100 including constituents. The constituents may include primary constituents 120 and auxiliary constituents 110. The quantum computer 2100 includes a quantum processing system 2110 for processing the quantum system 100. The quantum processing system 2110 includes at least one of a quantum evolution device 2112 to evolve one or more constituents of the quantum system 100 and a measurement device 2114 to measure one or more constituents of the quantum system 100. The quantum computer 2100 includes a controller 2120 connected to the quantum processing system 2110. The controller 2120 is configured to instruct the quantum processing system 2110 to perform a method of performing a quantum computation according to embodiments described herein, particularly according to the first method and/or the second method described above.

The quantum evolution device 2112 may be configured to perform any kind of quantum evolution of the constituents (primary constituents and/or auxiliary constituents), including, but not limited to, unitary operations, adiabatic evolutions, dissipative evolutions, and the like. The quantum evolution device 2112 may include subunits configured to perform dedicated types of operations, e.g. a unitary evolution unit to perform unitary operations, an adiabatic evolution unit to perform adiabatic evolutions, and the like. The physical realization of the quantum evolution device 2112 and its subunits may depend on the type of quantum constituents being used and the type of quantum evolution(s) being performed by the quantum evolution device 2112. Illustrative examples of systems that may be included in a quantum evolution device 2112 include laser systems, voltage control units, optical components, controllable magnetic fields, charged-coupled device (CCD) cameras, photodetectors, etc.

The measurement device 2114 may be configured to perform any kind of quantum measurement of the constituents (primary constituents and/or auxiliary constituents). The measurement device 2114 may be configured to perform at least single-body measurements on at least a subset of the auxiliary constituents, e.g. for processing the first entangled quantum state. The physical realization of the measurement device 2114 may depend on the type of quantum constituents being used and the type of quantum measurement(s) being performed. Illustrative examples of systems that may be included into a quantum measurement device 2114 include laser systems, voltage control units, optical components, controllable magnetic fields, charged-coupled device (CCD) cameras, photodetectors, etc.

In some cases, the quantum evolution device 2112 may include a measurement subunit configured to perform measurements, so that a separate measurement device 2114 may not be needed. In other words, the measurement device 2114 may be additional to the quantum evolution device 2112 or may be included in the quantum evolution device 2112.

The controller 2120 may include a classical computing system. A classical computing system, also called classical computer, can be understood as a computing system that processes information using only classical information carriers, such as classical bits. The term "classical" can in this context be understood as "not quantum". A classical computing system can include, for example, a personal computer or a network of personal computers.

The quantum processing system 2110 of the quantum computer 2100 is connected to the controller 2120, and may in particular be connected to the classical computing system of the controller 2120. Classical data may be transmitted between the quantum processing system 2110 and the controller 2120. The controller 2120 may store a classical description of the operations that are to be carried out by the quantum processing system 2110, and may control the quantum processing system 2110 based on said classical description. For example, the controller 2120 may store a classical description of each quantum protocol of the N quantum protocols, and may instruct the quantum processing system 2110 to perform said N quantum protocols based thereon. The controller 2120 may instruct the quantum processing system 2110 how to act on the quantum system 100, e.g. which quantum operations (unitary operations, measurements, and the like) shall be applied to which subsets of constituents. The controller may receive information from the quantum processing system 2110, e.g. regarding outcome(s) of one or more measurements performed on one or more constituents. The outcome(s) may be used for subsequently controlling the quantum processing system 2110. For example, based on one or more measurement outcomes, the controller may be configured to determine a correction operation and instruct the quantum processing system 2110 to perform said correction operation on one or more constituents.

### Embodiments

According to an embodiment, a method of performing a quantum computation is provided. The method includes preparing a first entangled quantum state on at least a subset of a set of auxiliary constituents of a quantum system. The quantum system includes the set of auxiliary constituents and a set of primary constituents. The method includes performing N quantum protocols on the quantum system. Each quantum protocol of the N quantum protocols realizes a quantum operation of N quantum operations. Each quantum operation of the N quantum operations acts on two or more primary constituents. For each quantum operation of the N quantum operations, a domain set associated with the quantum operation consists of the primary constituents acted upon by the quantum operation.

For each quantum operation of the N quantum operations, the quantum protocol realizing the quantum operation includes processing a portion of the first entangled quantum state, or a portion of a partially processed first entangled quantum state being a quantum state resulting from processing the first entangled quantum state in one or more previous quantum protocols of the N quantum protocols, to prepare an auxiliary entangled quantum state on an auxiliary set including two or more auxiliary constituents. The processing includes performing one or more, particularly a plurality of, single-body quantum operations on one or more, particularly a plurality of, auxiliary constituents of the first entangled quantum state or of the partially processed first entangled quantum state.

For each quantum operation of the N quantum operations, the quantum protocol realizing the quantum operation further includes coupling each primary constituent of the domain set of the quantum operation to an associated auxiliary constituent of the auxiliary set by performing one or more short-range quantum interactions. The coupling is performed before, during or after the processing of the portion of the first entangled state or the portion of the partially processed first entangled quantum state.

For each quantum operation of the N quantum operations, the quantum protocol realizing the quantum operation further includes performing one or more measurements on at least one primary constituent of the domain set and/or on at least one auxiliary constituent of the auxiliary set. The one or more measurements are performed in addition to the coupling or the one or more measurements form part of the coupling.

The N quantum protocols may be performed after the first entangled quantum state has been prepared.

It may be the case that each quantum operation of the N quantum operations acts only on primary constituents. It may be the case that each quantum operation of the N quantum operations does not act on any auxiliary constituent.

It may be the case that each quantum operation of the N quantum operations is a k-body operation for some k greater than or equal to two. A k-body operation is a quantum operation having a domain set that consists of k constituents. It may be the case that each quantum operation of the N quantum operations is a two-body operation.

For each quantum protocol of the N quantum protocols, the number of auxiliary constituents in the auxiliary set may be at least as large as the number of primary constituents of the domain set of the quantum operation realized by the quantum protocol. Accordingly, the auxiliary entangled quantum state may include at least as many auxiliary constituents as there are primary constituents included in the domain set of the quantum operation.

For each quantum protocol of the N quantum protocols, the auxiliary entangled quantum state may be prepared by processing the first entangled quantum state, or the partially processed first entangled quantum state, by single-body quantum operations only. The one or more single-body quantum operations may include one or more, particularly a plurality of, single-body measurements.

For each quantum protocol of the N quantum protocols, the one or more measurements that are performed on the at least one primary constituent of the domain set and/or on the at least one auxiliary constituent of the auxiliary set may be performed after the auxiliary entangled quantum state has been prepared.

As described herein, for each quantum protocol of the N quantum protocols, the one or more measurements that are performed on the at least one primary constituent of the domain set and/or on the at least one auxiliary constituent of the auxiliary set (hereafter denoted as "the one or more measurements" for short) may be performed according to two alternatives. According to a first alternative, the one or more measurements may be performed in addition to the coupling of each primary constituent of the domain set to an associated auxiliary constituent of the auxiliary set (hereafter "the coupling"). According to a second alternative, the one or more measurements may form part of the coupling. Accordingly, in the first alternative the one or more measurements and the coupling are separate operations, and in the second alternative the coupling includes the one or more measurements.

In the first alternative, the coupling may be performed before, during or after the processing of the portion of the first entangled state or the portion of the partially processed first entangled quantum state (hereafter "the processing"). The one or more measurements may be performed after the coupling and after the processing.

In the first alternative, the processing and the coupling may result in an enlarged auxiliary entangled quantum state being prepared on at least the auxiliary constituents of the auxiliary set and the primary constituents of the domain set. The one or more measurements may be performed after the enlarged auxiliary entangled quantum state has been prepared.

In the second alternative, the coupling may be performed after the processing. The one or more measurements, which in the second alternative form part of the coupling, may include one or more many-body measurements acting on two or more constituents of the quantum system.

For each quantum protocol of the N quantum protocols, in response to the one or more measurements that are performed on the at least one primary constituent of the domain set and/or on the at least one auxiliary constituent of the auxiliary set, one or more further quantum operations may be performed on the domain set and/or the auxiliary set. The one or more further quantum operations may result in the quantum operation of the N quantum operations being applied to the primary constituents in the domain set. The one or more further quantum operations may include one or more correction operations.

For each quantum operation of the N quantum operations, the quantum protocol realizing the quantum operation may include, in response to performing the one or more measurements that are performed on the at least one primary constituent of the domain set and/or the at least one auxiliary constituent of the auxiliary set, one or more correction operations may be performed on one or more primary constituents of the domain set and/or one or more auxiliary constituents of the auxiliary set. A correction operation may be performed to compensate for an erroneous quantum operation being applied if an undesired measurement outcome is obtained.

The first entangled quantum state may be a fully entangled quantum state. Additionally, or alternatively, the auxiliary constituents of the first entangled quantum state may be arranged according to a spatial arrangement extending in at least two spatial dimensions.

The first entangled quantum state may be a default quantum state independent of the N quantum operations. The first entangled quantum state may be adapted for realizing any plurality of N quantum operations such that one or more size parameters of the plurality of N quantum operations are smaller than one or more respective predetermined values. The first entangled quantum state may be adapted for realizing any plurality of N quantum operations such that the number N is smaller than a first predetermined value and the total number of constituents on which the plurality of N quantum operations act is smaller than a second predetermined value.

At least one quantum operation of the N quantum operations, particularly all of the N quantum operations, may be a long-range quantum operation. A long-range quantum operation may act on at least two primary constituents that are spaced apart from each other by a distance greater than an interaction cut-off distance of the quantum system, particularly by a distance greater than at least two times the interaction cut-off distance, at least five times the interaction cut-off distance, more particularly at least ten times the interaction cut-off distance, more particularly at least fifty times the interaction cut-off distance. A long-range quantum operation may act on at least two primary constituents that are spaced apart from each other by a distance that scales faster than a logarithm of the total number of primary constituents in the quantum system.

The N quantum protocols may act respectively on N portions of the quantum system. Each of the N portions may include, or may consist of, a subset of the set of primary constituents and a subset of the set of auxiliary constituents. The N portions may be mutually disjoint.

The N quantum protocols may be performed in parallel.

The auxiliary constituents of the first entangled quantum state may include a total of M auxiliary constituents, wherein N has a scaling greater than a logarithmic scaling with M, particularly a scaling of at least M^{1/q} for some number q ≥ 2. The property that N has a scaling greater than a logarithmic scaling with M, particularly a scaling of at least M^{1/q}, can be understood in the sense that N grows faster than a logarithm of M, particularly faster than M^{1/q}, as M increases.

The quantum system may include constituents. The method may further include assigning, e.g. using a controller of a quantum computer used for performing the method, a first subset of the constituents to be the set of primary constituents. The method may further include assigning, e.g. using the controller, a second subset of the constituents to be the set of auxiliary constituents.

The first subset may be assigned to be the set of primary constituents independently of the N quantum operations that are to be realized, and/or the second subset may be assigned to be the set of auxiliary constituents independently of the N quantum operations that are to be realized.

The first subset may be assigned to be the set of primary constituents at least for the duration of a first quantum protocol. The second subset may be assigned to be the set of auxiliary constituents at least for the duration of the first quantum protocol. The first subset may be assigned to be the set of primary constituents at least for the duration of the N quantum protocols. The second subset may be assigned to be the set of auxiliary constituents at least for the duration of the N quantum protocols.

The first entangled quantum state may be prepared by short-range quantum operations only.

Each quantum protocol of the N quantum protocols may include short-range quantum operations only. For each quantum protocol of the N quantum protocols, the total number of short-range quantum operations in the quantum protocol may scale at most logarithmically with the total number of constituents of the quantum system. For each quantum protocol of the N quantum protocols, the total number of short-range quantum operations in the quantum protocol may be constant. A constant total number of short-range quantum operations is a number that is independent of the total number of constituents of the quantum system.

The N quantum protocols may include a first quantum protocol realizing a first quantum operation of the N quantum operations and a second quantum protocol realizing a second quantum operation of the N quantum operations.

The first quantum protocol may include processing a first portion of the first entangled quantum state, or a first portion of a partially processed first entangled quantum state being a quantum state resulting from processing the first entangled quantum state in one or more previous quantum protocols of the N quantum protocols, to prepare a first auxiliary entangled quantum state on a first auxiliary set comprising two or more auxiliary constituents. The processing of the first portion may include performing single-body quantum operations, particularly single-body measurements, on a first plurality of auxiliary constituents of the first entangled quantum state or of the partially processed first entangled quantum state. The first auxiliary entangled quantum state may be prepared by processing the first entangled quantum state, or the partially processed first entangled quantum state, by single-body quantum operations only.

The second quantum protocol may include processing a second portion of the first entangled quantum state, or a second portion of a partially processed first entangled quantum state being a quantum state resulting from processing the first entangled quantum state in one or more previous quantum protocols of the N quantum protocols, to prepare a second auxiliary entangled quantum state on a second auxiliary set including two or more auxiliary constituents. The processing of the second portion may include performing single-body quantum operations, particularly single-body measurements, on a second plurality of auxiliary constituents of the first entangled quantum state or of the partially processed first entangled quantum state. The second auxiliary entangled quantum state may be prepared by processing the first entangled quantum state, or the partially processed first entangled quantum state, by single-body quantum operations only.

At least a subset of the first plurality of auxiliary constituents may define a first path of auxiliary constituents. At least a subset of the second plurality of auxiliary constituents may define a second path of auxiliary constituents, wherein the first path crosses the second path.

The first path may be a measurement path defined by measured auxiliary constituents of the first plurality of auxiliary constituents. The first path may include a first set of nodes, wherein each node of the first set of nodes corresponds to a measured auxiliary constituent of the first plurality of auxiliary constituents. The first path may include a first set of edges, wherein each edge of the first set of edges connects two consecutive nodes of the first set of nodes.

The second path may be a measurement path defined by measured auxiliary constituents of the second plurality of auxiliary constituents. The second path may include a second set of nodes, wherein each node of the second set of nodes corresponds to a measured auxiliary constituent of the second plurality of auxiliary constituents. The second path may include a second set of edges, wherein each edge of the second set of edges connects two consecutive nodes of the second set of nodes.

The property that the first path crosses the second path may include that a first edge of the first set of edges of the first path crosses a second edge of the second set of edges of the second path. Two edges may be considered to cross, or intersect, if they have at least one point in common (when the edges are drawn in a same two-dimensional plane).

According to a further embodiment, a method of performing a quantum computation is provided. The method includes performing N quantum protocols on a quantum system including a set of primary constituents and a set of auxiliary constituents. Each quantum protocol of the N quantum protocols realizes a quantum operation of N quantum operations. Each quantum operation of the N quantum operations acts on two or more primary constituents. For each quantum operation of the N quantum operations, a domain set associated with the quantum operation consists of the primary constituents acted upon by the quantum operation. The N quantum protocols include a first quantum protocol realizing a first quantum operation of the N quantum operations and a second quantum protocol realizing a second quantum operation of the N quantum operations.

The first quantum protocol includes processing a first plurality of auxiliary constituents to prepare a first auxiliary entangled quantum state on a first auxiliary set including two or more auxiliary constituents. At least a subset of the first plurality of auxiliary constituents defines a first path of auxiliary constituents. The first quantum protocol includes coupling each primary constituent of the domain set of the first quantum operation to an associated auxiliary constituent of the first auxiliary set by performing one or more short-range quantum interactions. The coupling is performed before, during or after the processing of the first plurality of auxiliary constituents. The first quantum protocol includes performing one or more measurements on at least one primary constituent of the domain set of the first quantum operation and/or on at least one auxiliary constituent of the first auxiliary set. The one or more measurements are performed in addition to the coupling or the one or more measurements form part of the coupling.

The second quantum protocol includes processing a second plurality of auxiliary constituents to prepare a second auxiliary entangled quantum state on a second auxiliary set including two or more auxiliary constituents. At least a subset of the second plurality of auxiliary constituents defines a second path of auxiliary constituents. The second path crosses the first path. The second quantum protocol includes coupling each primary constituent of the domain set of the second quantum operation to an associated auxiliary constituent of the second auxiliary set by performing one or more short-range quantum interactions. The coupling is performed before, during or after the processing of the second plurality of auxiliary constituents. The second quantum protocol includes performing one or more measurements on at least one primary constituent of the domain set of the second quantum operation and/or on at least one auxiliary constituent of the second auxiliary set. The one or more measurements are performed in addition to the coupling, or the one or more measurements form part of the coupling.

The present method may include any feature or combination of features of the methods described herein. Particularly, the method may include any feature or feature combination of the first method (see e.g. Figs. 1-13 and Figs. 22-27) or the second method (see e.g. Figs. 14-20 and Fig. 28) described herein.

In relation to the first method, processing the first plurality of auxiliary constituents and the second plurality of auxiliary constituents may include performing single-body quantum operations, in particular single-body quantum measurements, on a (partially processed) first entangled quantum state in order to prepare the first auxiliary entangled quantum state and the second auxiliary entangled quantum state, respectively, as described above.

In relation to the second method, processing the first plurality of auxiliary constituents may include acting on each auxiliary constituent of the first plurality of auxiliary constituents by at least one of an entangling quantum operation and a single-body quantum operation, particularly a single-body measurement. An entangling quantum operation can be understood as a quantum operation (e.g. a unitary operation, measurement, or the like) that entangles at least two constituents with each other. Processing the first plurality of auxiliary constituents may include entangling each auxiliary constituent of the first plurality of auxiliary constituents to at least one other auxiliary constituent of the first plurality of auxiliary constituents. Processing the first plurality of auxiliary constituents may include performing a single-body quantum operation, particularly a single-body quantum measurement, on each auxiliary constituent of at least a subset of the first plurality of auxiliary constituents.

Processing the second plurality of auxiliary constituents may include acting on each auxiliary constituent of the second plurality of auxiliary constituents by at least one of an entangling quantum operation and a single-body quantum operation, particularly a single-body measurement. Processing the second plurality of auxiliary constituents may include entangling each auxiliary constituent of the second plurality of auxiliary constituents to at least one other auxiliary constituent of the second plurality of auxiliary constituents. Processing the second plurality of auxiliary constituents may include performing a single-body quantum operation, particularly a single-body quantum measurement, on each auxiliary constituent of at least a subset of the second plurality of auxiliary constituents.

The first path (e.g. first path 1410ab in Fig. 14) may include two auxiliary constituents of the first auxiliary set. The first path may connect the two auxiliary constituents of the first auxiliary set to each other. The second path (e.g. second path 1420cd in Fig. 14) may include two auxiliary constituents of the second auxiliary set. The second path may connect the two auxiliary constituents of the second auxiliary set to each other.

The first path may include a first set of nodes, wherein each node of the first set of nodes corresponds to an auxiliary constituent of at least a subset of the first plurality of auxiliary constituents. The first path may include a first set of edges, wherein each edge of the first set of edges connects two consecutive nodes of the first set of nodes. The second path may include a second set of nodes, wherein each node of the second set of nodes corresponds to an auxiliary constituent of at least a subset of the second plurality of auxiliary constituents. The second path may include a second set of edges, wherein each edge of the second set of edges connects two consecutive nodes of the second set of nodes. The property that the first path crosses the second path may include that a first edge of the first set of edges of the first path crosses a second edge of the second set of edges of the second path (this may e.g. happen with respect to the first method). Two edges may be considered to cross, or intersect, if they have at least one point in common. Additionally, or alternatively, the property that the first path crosses the second path may include that the first set of nodes and the second set of nodes have at least one node in common (this may e.g. happen with respect to the second method). Paths that cross each other may include the possibility that portions of the paths, potentially including multiple nodes and/or multiple edges, overlap with each other.

The method may include determining a first collection of path portions of the first path and/or the second path (e.g. the path portions as shown in Fig. 15). The path portions of the first collection may be non-intersecting path portions. The method may include processing at least a subset of the auxiliary constituents associated with the path portions of the first collection to prepare one or more first entangled quantum states (e.g. the quantum states 1710ab, 1721cd, 1722cd and 1723cd in Fig. 17).

The method may include determining a second collection of path portions (e.g. the vertical path portions shown in Fig. 18) including one or more, particularly all, remaining path portions of the first path and/or the second path not contained in the first collection. The path portions of the second collection may be non-intersecting path portions. The method may include processing at least a subset of the auxiliary constituents associated with the path portions of the second collection to prepare one or more second entangled quantum states (e.g. the quantum state 2020cd in Fig. 20). Processing at least a subset of the auxiliary constituents associated with the path portions of the second collection may be performed after the one or more first entangled quantum states have been prepared. Processing at least a subset of the auxiliary constituents associated with the path portions of the second collection may include entangling one or more auxiliary constituents associated with one or more path portions of the second collection with one or auxiliary constituents associated with one or more path portions of the first collection. The one or more path portions of the second collection and the one or more path portions of the first collection may belong to a same path. The one or more path portions of the second collection and the one or more path portions of the first collection may both belong to the first path or may both belong to the second path.

The first auxiliary entangled quantum state may be included in the one or more first entangled quantum states or the one or more second entangled quantum states. The second auxiliary entangled quantum state may be included in the one or more first entangled quantum states or the one or more second entangled quantum states.

According to a further embodiment, a quantum computer is provided. The quantum computer includes a quantum system including constituents. The constituents include a set of primary constituents and a set of auxiliary constituents. The quantum computer includes a quantum processing system for processing the quantum system. The quantum processing system includes at least one of a quantum evolution device to evolve one or more constituents of the quantum system and a measurement device to measure one or more constituents of the quantum system. The quantum computer includes a controller connected to the quantum processing system, the controller being configured to instruct the quantum processing system to perform a method of performing a quantum computation according to embodiments described herein.

According to a further embodiment, a controller for a quantum computer acting on a quantum system is provided. The controller is configured to instruct the quantum computer to perform a method of performing a quantum computation according to embodiments described herein.

According to a further embodiment, a computer program is provided. The computer program includes instructions which, when the computer program is executed by a quantum computer, cause the quantum computer to carry out a method of performing a quantum computation according to embodiments described herein.

According to a further embodiment, a computer-readable data carrier or a data carrier signal carrying a computer program according to embodiments described herein is provided.

### Further aspects

### I. Introduction

Quantum computers hold the promise to solve problems that are not accessible for classical computing devices, ranging from material design over optimization in logistics to quantum chemistry. It is beneficial to have quantum computers with a large number of qubits (or other quantum constituents), which need to be properly designed in order to allow for an efficient implementation of large-scale quantum computations. Several physical realizations, such as quantum computers based on superconducting qubits, but also approaches based on trapped atoms or ions, can at the moment only realize quantum interactions at a very short range, such as nearest-neighbor quantum interactions in a one-dimensional or two-dimensional spatial arrangement of the qubits (constituents). While in principle this leaves the computational complexity of the quantum algorithms unaltered, such geometrical restrictions lead to a significant (polynomial) overhead to obtain long-range quantum gates or an all-to-all connectivity between the qubits. For practical purposes, it is hence beneficial to minimize overheads, and find efficient ways to realize long-distance gates also in such restricted settings.

In the present disclosure, a quantum computer architecture is proposed that involves short-range quantum interactions only, and potentially even only nearest-neighbor interactions, among the qubits. The approach described herein does not depend on any physical realization of the qubits, i.e. is platform independent. It is shown how to split up the qubits into data qubits (or more generally "primary constituents") for quantum information processing, and auxiliary qubits ("auxiliary constituents") for entanglement generation for different structures to optimize performance. This includes proposals for existing geometries, but also optimized 2D and 3D architectures. A multipartite entangled state generated among the auxiliary qubits is used as a resource to realize two-qubit and multi-qubit gates on the data qubits by performing suitable quantum protocols. It is demonstrated how one can efficiently implement $O \left(\sqrt{n}\right)$ long-range two-qubit gates in parallel among substantially arbitrary pairs of qubits, with only constant overhead, where the total number of qubits is n. This can be achieved by performing mid-circuit single-qubit measurements on a 2D cluster state (or more generally a first entangled quantum state as described herein) that is generated among the auxiliary qubits. The mid-circuit measurements allow for an efficient, constant depth implementation of each long-range quantum gate by generating a Bell pair ("auxiliary entangled quantum state"). Further, a large number N of long-range quantum gates can be realized in this manner in parallel.

In addition, also multi-qubit gates (acting on three or more qubits) or even entire quantum circuits, such as Clifford circuits, can be flexibly implemented using the present approach. Further, optimal lattice structures are identified to achieve this aim, where the qubits are split into data processing qubits and auxiliary qubits to generate (multipartite) entanglement.

### II. Outline

For the sake of concreteness, we consider a quantum computer architecture based on a set of qubits that can interact via nearest-neighbor couplings indicated by edges in a given lattice structure. The method is not limited to qubits, and quantum constituents other than qubits can be considered. Likewise, the method also applies to quantum architectures including short-range interactions other than nearest-neighbor couplings.

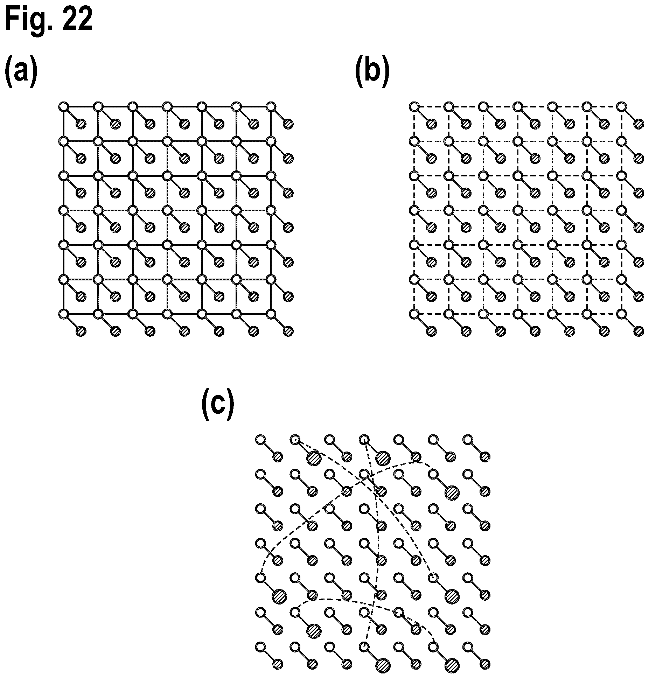

The qubits are divided into data qubits ("primary constituents") that are used to store and process quantum data, and auxiliary qubits ("auxiliary constituents") for entanglement generation. See Fig. 22(a), showing the example of a quantum system involving a set of data qubits (depicted as circles with hatching) and auxiliary qubits (circles without hatching) arranged according to a two-dimensional lattice. The lines connecting the qubits in Fig. 22(a) illustrate the pattern of the available (two-body) quantum interactions between the qubits. That is to say, the auxiliary qubits can interact by means of nearest-neighbor interactions according to the two-dimensional lattice geometry. Further, each data qubit can interact with (at least) one auxiliary qubit along a diagonal edge, as shown in Fig. 22(a).

Single-qubit gates may be performed directly on the data qubits, while two-qubit and multi-qubit gates acting on multiple data qubits will be implemented by utilizing entanglement shared between the auxiliary qubits in the form of a first entangled quantum state as described herein. Here we consider the example of a two-dimensional (2D) cluster state |C_{2D}> on *n* auxiliary qubits, defined as $\left|{C}_{2 D}\right〉 = {\prod }_{\left(i, j\right) ∈ E} {CZ}_{ij} {\left|+\right〉}^{⊗ n}$ Therein, CZᵢⱼ is a controlled-Z gate ("CZ gate" for short) acting on auxiliary qubits i and j, and E is the edge set of the two-dimensional lattice of auxiliary qubits, wherein the edge between qubits i and j is denoted as (i, j). The CZ gate is defined by CZ = diag(1, 1, 1, -1). Further, we have $\left|+\right〉 = 1 / \sqrt{2} \left(\left|0\right〉+\left|1\right〉\right)$. In other words, the 2D cluster state is obtained by applying a product of CZ gates, one for each edge of the two-dimensional lattice of auxiliary qubits, to the initial state |+>^{⊗n}. Notably, the CZ gates respect the pattern of available interactions between the auxiliary qubits as indicated in Fig. 22(a). Further, the gates CZᵢⱼ mutually commute, so that all CZ gates can be performed in parallel, i.e. in a single time step. The 2D cluster state is a special instance of a graph state, where the interaction pattern corresponds to an underlying graph G described by *n* vertices and a set of edges (*i, j*) *∈ E.*

Fig. 22(b) illustrates a 2D cluster state that has been prepared on the quantum system of Fig. 22(a). In Fig. 22(b), the dashed vertical and horizontal lines indicate the pattern of CZ gates that are applied to the respective auxiliary qubits in order to generate the 2D cluster state. (In Fig. 22(b) and likewise Fig. 22(c), the diagonal edges between data qubits and auxiliary qubits do not indicate the application of a CZ gate, but merely reflect that an interaction between these qubits is available i.e. can take place if desired, similar to Fig. 22(a)).

With a single round of suitable single-qubit measurements, the 2D cluster state can be flexibly transformed into different target configurations, including multiple, long-distance Bell pairs. It will be useful for the following to describe the action of a (single-qubit) Pauli measurement on a qubit of a cluster state, and more generally any graph state.

Consider an arbitrary graph state, i.e. the graph G is arbitrary. If a qubit of the graph state is measured in the Pauli X, Y or Z basis, the resulting quantum state is (up to a local unitary operation) again a graph state, with a different graph. Specifically, the action of a Pauli X, Y or Z measurement of a qubit located at a vertex *a* of the graph G can be described, up to local unitary correction operations, by the following graphical rules:
(i) a Z-measurement erases all edges connected to *a*;
(ii) a Y-measurement first inverts the neighborhood graph of *a* (the neighbors of *a* are all vertices connected to *a* by an edge; the neighborhood graph of *a* is the subgraph existing between the neighbors of *a*; inverting the neighborhood graph of *a* means that any edge between two neighbors of *a* is replaced by a non-edge and vice versa) followed by a deletion of all edges connected to *a*;
(iii) an X-measurement first inverts the neighborhood graph of an (arbitrary) neighbor *b* of *a,* followed by an inversion of the neighborhood graph of *a,* followed by a deletion of all edges connected to *a,* followed by another inversion of the neighborhood graph of *b.*

As will be shown in more detail below, the above graphical rules can be used to show how Bell states can be prepared between pairs of auxiliary qubits by performing single-qubit measurements on a cluster state. The auxiliary qubits may be far away from each other, in other words the Bell states can establish long-range entanglement across the lattice of auxiliary qubits. Bell states prepared in this manner are illustrated in Fig. 22(c) by the dashed lines connecting pairs of auxiliary qubits.

Each Bell state (being an instance of an "auxiliary entangled quantum state" as described herein) allows one to implement a two-qubit gate, such as a CNOT or CZ gate, remotely on data qubits that are coupled to the auxiliary qubits of the Bell state, by performing a measurement on the qubits of the Bell state (teleportation-like protocol). Accordingly, long-range quantum gates between data qubits can be realized. Notice that the afore-mentioned measurements can be performed simultaneously, so with only one round of 2n nearest neighbor gates, and one round of (mid-circuit) measurements one can perform multiple long-range two-qubit gates in parallel. Together with single-qubit operations on data qubits, one can perform multiple rounds of single- and multiple, long-range two-qubit gates to realize arbitrary quantum circuits, overcoming limited connectivity.

The usage of 2D cluster states in the present method is different from measurement-based quantum computation, since quantum information is not directly processed by means of multiple rounds of single-qubit measurements, but the 2D cluster state serves as a flexible resource to generate multiple bipartite entangled states, which in turn are used to implement (multiple) long-range gates among data qubits.

### II.1. Processing of the cluster state by single-body quantum operations

A possible scheme for establishing a Bell pair ("auxiliary entangled quantum state") between any two qubits i and j in a 2D cluster state is as follows. One identifies a path of edges from the vertex i to the vertex j ("measurement path") and performs a Y-measurement on all qubits of the path, except the end vertices i and j. Further, a Z-measurement is performed on each qubit that is a neighbor of at least one vertex of the path. The latter Z-measurements disconnect the path from the remainder of the graph (see graphical rule (i) above). It may be envisaged that the Z measurements are performed first, thus establishing a one-dimensional (1D) cluster state of the qubits of the path. The Y-measurements, which may be performed thereafter, measure out the qubits of the 1D cluster state except for the endpoints i and j, thereby providing a Bell state between the qubits i and j (this can be verified by repeatedly applying the graphical rule (ii) above). It is noted that this order of the operations, while useful for obtaining an understanding of how a Bell state may be prepared, is not necessary: the Y and Z measurements may be executed in any order, and even simultaneously.

The above-described procedure for preparing a Bell state cuts out a (quasi-) one-dimensional region of the 2D cluster state, which becomes disentangled from the remaining auxiliary qubits. This may hinder establishing further Bell states, e.g. it may limit the possibility of preparing a further Bell state between qubits that lie on opposite sides of said (quasi-) one-dimensional region, since a further measurement path that would cross the disentangled region cannot be used to prepare a Bell state.

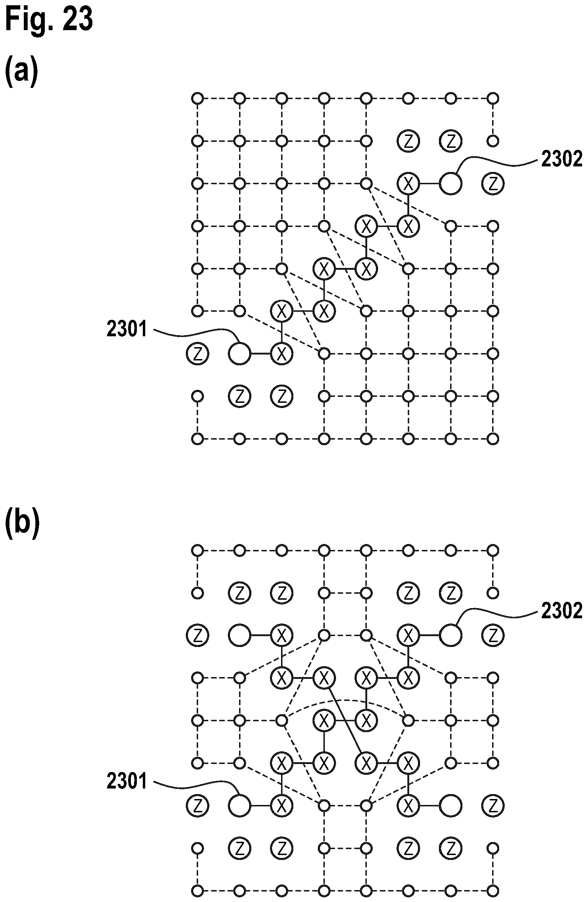

In the following, an alternative scheme is provided to prepare multiple Bell states in arbitrary spatial configurations, regardless of whether the various measurement paths cross or not. The scheme is illustrated in Figs. 23(a)-(b).

Fig. 23(a) shows auxiliary qubits that were initially prepared in a 2D cluster state (as e.g. shown in Fig. 22(a)). It is considered to prepare a Bell state ("auxiliary entangled quantum state") between auxiliary qubit 2301 and auxiliary qubit 2302 by performing single-qubit operations on the 2D cluster state. A path from auxiliary qubit 2301 to auxiliary qubit 2302 is considered, wherein the path has a zig-zag diagonal shape consisting of alternating horizontal and vertical edges. Each qubit on the path except for the two qubits 2301 and 2302 at the endpoints is measured in the X basis, as shown in Fig. 23(a). Further, some of the qubits adjacent to qubits 2301 and 2302 are measured in the Z basis, as also shown.

By performing the X-measurements as indicated in Fig. 23(a), a Bell state between the two auxiliary qubits 2301 and 2302 is prepared (this may be verified by repeatedly applying the graphical rule (iii) above). Further, the entanglement structure of the remaining quantum state (i.e. the state of the unmeasured auxiliary qubits) is substantially preserved. As shown in Fig. 23(a) by the dashed lines, the quantum state obtained after the X measurements is again a graph state having edges that "bridge" the measurement path ("zipper scheme"). What is more, the graph state in question is again a 2D cluster state, up to minor modifications arising from the Z measurements in the vicinity of the endpoints of the path. The measurement path shown in Fig. 23(a) is an entanglement-structure-preserving measurement path as described herein.

One can hence continue in the same way, and establish further Bell pairs from the remaining entangled state. In particular, one can establish Bell pairs whose paths (in the original lattice) cross, which is illustrated in Fig. 23(b). The measurement paths shown in Fig. 23(b) are also entanglement-structure-preserving measurement paths.

Figs. 23(a)-(b) show examples of (entanglement-structure-preserving) measurement paths that extend along a diagonal of the 2D lattice. The disclosure is not limited thereto. Any two vertices (also called nodes) in a 2D lattice can be connected by a path involving two diagonal portions extending in different directions, with just one turning portion (although paths with several turning portion are also permitted). Each diagonal portion has a zig-zag structure, similar to the path shown in Fig. 23(a). Further, the measurements used to generate a Bell state for such a path are similar to the measurements shown in Fig. 23(a). Namely, an X measurement is performed on all qubits of the path except for the two endpoints of the path. Further, Z measurements are performed in the areas surrounding the endpoints, as also shown in Fig. 23(a). In addition, the qubits in the neighborhood of the turning portion of the path are also measured in the Z basis. The turning portion is the portion of the path where the path changes direction. For example, in Fig. 10, the turning portion is the vertical path portion consisting of three consecutive nodes, and the two edges between them, that is located between the two diagonally extending path portions. The neighborhood of the turning portion is defined to be the set of all nodes (qubits) outside of the path that are connected to at least one node in the turning portion by an edge of the (partially processed) cluster state. Each node in the neighborhood is measured in the Z basis, in order to "disconnect" the turning portion from the neighboring qubits. This applies to any turning portion of the path - yet, as mentioned, it suffices to consider paths with only one turning portion, since any two qubits in the cluster state can be connected to each other using a path of this form. By performing the aforementioned X and Z measurements, a Bell pair can be generated between the endpoints of the path, while essentially preserving the entanglement structure of the cluster state.

Accordingly, a plurality of Bell states can be generated between essentially arbitrary pairs of auxiliary qubits, where the measurement paths may or may not cross. Only at the end points and the single turning portion (if present), a small hole is introduced in the lattice when generating Bell pairs in this way, which however does not hinder the generation of additional Bell pairs. Each path has length $O \left(\sqrt{n}\right)$, and one can achieve $O \left(\sqrt{n}\right)$ Bell pairs between distinct pairs of nodes.

It is further noted that in Figs. 23(a)-(b), different from the other figures of the present disclosure, the symbol "X" indicates that specifically an X-measurement is performed, and likewise the symbol "Z" refers to a Z measurement. In contrast, in the other figures, the symbol "X" could refer to any possible single-body measurement, not limited to a Pauli X measurement. Further, in Figs. 23(a)-(b), some of the qubits are drawn as circles that are larger than the remaining circles; this is merely a matter of presentation. Further, in order not to overload the figures, the data qubits are not shown in Figs. 23(a)-(b).

### II.2. Realizing quantum operations via auxiliary entangled quantum states

Once a Bell state has been prepared on a pair of auxiliary qubits (forming an "auxiliary set" as described herein, and the Bell state being an "auxiliary entangled quantum state"), the Bell state may be used to realize a two-body gate on the associated data qubits (i.e. the data qubits in the "domain set" of the gate that is to be realized) by performing a teleportation-like protocol. For example, a CZ gate can be applied to the data qubits. To this end it is noted that a Bell state |B> is given by the expression $\left|B\right〉 = CZ \left|+\right〉 \left|+\right〉 = 1 / \sqrt{2} \left(\left|0\right〉\left|+\right〉+\left|1\right〉\left|-\right〉\right) .$ The two data qubits associated to the auxiliary qubits of the Bell state (i.e. the two data qubits in the mentioned domain set) may be coupled to the state |B> via respective CZ gates. Thereafter, the two auxiliary qubits of the Bell pair |B> are measured in the X basis. Depending on the measurement outcomes (-1)*^{mₖ}* with *m*₁,*m*₂ ∈ {0,1}, local Z-correction operations *Z*^{*m*₂} ⊗ *Z*^{*m*₁} on the data qubits may be performed. This results in the application of a CZ gate to the two data qubits.

It is easy to adapt the above procedure to realize, for example, a CNOT gate acting on the data qubits, since CNOT is equal to CZ up to the application of a single-qubit unitary gates (namely Hadamard gates performed on the target qubit before and after the CZ gate). Likewise, many other two-body gates can be realized, by performing single-qubit operations before and after the application of the CZ gate.

Notice that the coupling between the auxiliary qubits and the data qubits can already be done before the 2D cluster state is processed to prepare the Bell state, and hence does not require an additional time step.

In light of the above, a plurality of N quantum operations, which may be long-range gates, can be realized by processing each of the respective Bell states (and the associated data qubits) in the above-described manner. As described above, a large number of quantum operations may be realized, where the corresponding measurement paths may cross in essentially arbitrary ways, and the quantum operations cane be performed in parallel.

### II.3. Realizing many-body operations acting on multiple qubits

In the discussion above, it was shown how two-qubit operations (e.g. CZ gates or CNOT gates) can be realized. The disclosure is not limited thereto. Many-body gates acting on three or more qubits can also be realized using similar procedures.

One example involves a family of multi-qubit gates of the form exp(-*iαZ*^{⊗*m*}) acting on *m* qubits, where *m* can be any integer larger than one and where the angle *α* is arbitrary. Such gates can be implemented deterministically using an *m* -qubit GHZ state, defined by $\left|GHZ\right〉 = {\prod }_{j = 2}^{m} {CZ}_{1 , j} {\left|+\right〉}^{⊗ m} = 1 / \sqrt{2} \left(\left|0\right〉{\left|+\right〉}^{⊗ m - 1}+\left|1\right〉{\left|-\right〉}^{⊗ m - 1}\right) ,$ where |-> = (|0>-|1>)/√2. That is to say, the state |*GHZ>,* defined on *m* auxiliary qubits ("auxiliary set") can serve as an auxiliary entangled quantum state that is used for realizing the gate exp(*-iαZ*^{⊗*m*}) on *m* associated data qubits (primary constituents forming the domain set of the gate in question). The auxiliary qubits and the data qubits are labelled *A₁* to *Aₘ* and *D₁* to *Dₘ*, respectively.

It will be described below how the GHZ state can be obtained from a 2D cluster state by performing appropriate single-qubit operations thereon. Before doing so, it is described how the GHZ state can be used to realize gates of the form exp(-*iαZ*^{⊗*m*}) .

We call the first qubit (i.e. qubit *A₁*) of the GHZ state the root qubit. The gate exp(-*iαZ*^{⊗*m*}) can be realized by coupling the data qubits *D₁* to *Dₘ* to the auxiliary qubits *A₁* to *Aₘ* of the GHZ state, specifically by applying a CZ gate between qubits *D₁* and *A₁* and by applying a CNOT gate between qubits *Dⱼ* and *Aⱼ*, for every i ranging from 2 to *m.* In other words, the overall unitary operator ${CZ}_{{D}_{1} {A}_{1}} {\prod }_{j = 2}^{m} {CNOT}_{{D}_{j} , {A}_{j}}$ is applied (where it is recalled that the CNOT gates maps |00> to |00>, maps |01> to |01>, maps |10> to |11> and maps |11> to |10>). Then, the auxiliary qubits *A₁* to *Aₘ* are measured. Specifically, auxiliary qubits *A*₂ to *Aₘ* are measured in the *Z* -basis, and a unitary *Z* correction operation is applied to auxiliary qubit *A*₁ if the parity of the measurement outcomes is odd. This is followed by a single-qubit rotation *e^{-iαX}* on auxiliary qubit *A*₁, which is subsequently measured in *Z* . A final correction operation *Z*^{⊗*m*} on all data qubits *D*₁,*..., Dₘ* is applied if the result of the last measurement of auxiliary qubit *A*₁ is -1. This realizes the multi-qubit rotation exp(*-iαZ*^{⊗*m*}) on the data qubits *D₁* to *Dₘ.*

The above procedure can easily be adapted to realize rotations that are specified by an arbitrary tensor product of Pauli operators rather than *Z*^{⊗*m*}, e.g. by applying single-qubit unitary operators to the data qubits in order to rotate *Z* into *X* or Y, as desired. Furthermore, sequences of multi-qubit rotations exp(*-iαZ*^{⊗*m*}) applied on different subsets of data qubits, with potentially different angles *α*, allow one to implement arbitrary multi-qubit diagonal gates. A particular interesting instance of gates that can be realized in this way are multi-qubit Toffoli gates (where the number of qubits on which the Toffoli gate acts is arbitrary), which are - up to local unitary operations, which can be easily accounted for - equivalent to a diagonal gate with all diagonal entries being 1, except at the last position which is -1.

Further, it is noted that single-qubit operations can be applied directly to the data qubits in an arbitrary manner. Accordingly, based on the aforementioned gates that can be realized using the GHZ state, many additional gates can be obtained by allowing the gates to be preceded and/or followed by single-qubit gates. Thus, a plurality of possible multi-qubit gates can be realized by the procedure described above.

Another example of a family of multi-qubit operations that can be realized using the present method is the family of Clifford operations *U* acting on an arbitrary number *m* of qubits. Therein, m may even scale with the system size, i.e. m need not be a constant. A Clifford operation is any unitary operation from the Clifford group, i.e. any unitary operation that can be obtained as a quantum circuit consisting of CNOT, Hadamard and Phase gates (where the Phase gate is a single-qubit gate mapping |0> to |0> and |1> to *i*|1*>,* where *i* is the imaginary unit. Via the Choi-Jamiolkowski isomorphism, there exists for each Clifford operation *U* on *m* qubits a corresponding 2*m*-qubit state |*ψ_{U}*〉 ("auxiliary entangled quantum state") that is - up to local unitary operations - equivalent to a graph state. The state |*ψ_{U}* 〉*_{AA'}* is defined as *U* acting on system *A*' (one half of the total system) of a maximally entangled state ${⊗}_{j = 1}^{m} {\left|{ϕ}^{+}\right〉}_{{A}_{j} A {′}_{j}}$ with $\left|{ϕ}^{+}\right〉 = \left(\left|0\right〉\left|0\right〉+\left|1\right〉\left|1\right〉\right) / \sqrt{2}$. The state |*ψ_{U}*〉 allows one to implement the Clifford operation *U* deterministically on an arbitrary input state of the data qubits. This is achieved by teleporting the data qubits through the state |*ψ_{U}*〉 *,* i.e. by performing Bell measurements on each pair consisting of a data qubit *Dⱼ* and an associated auxiliary qubit *Aⱼ*. Since the operation *U* is Clifford, Pauli correction operations depending on the measurement outcomes can be performed, yielding a deterministic implementation of *U* . Finally, the output qubits (i.e. the qubits in subsystem *A*') are swapped with the data qubits to restore the quantum state to its original position.

Further, it is again noted that single-qubit operations can be applied directly to the data qubits in an arbitrary manner, so that additional gates can be realized by allowing the Clifford operations to be preceded and/or followed by single-qubit gates.

The multipartite states used to realize the aforementioned multi-qubit gates, namely the GHZ state and the state |*ψ_{U}*〉 , can be generated from a 2D cluster state by processing the latter by single-qubit operations. It is noted that both the GHZ state and the state |*ψ_{U}*〉 are stabilizer states, and hence equal to a graph state up to the application of a local unitary operation. Since local unitary operations can be realized by directly acting on the qubits, it thus suffices to show that arbitrary graph states can be obtained by processing a cluster state by single-qubit operations.

One particular method involves utilizing the fact that a 2D cluster state is a universal resource for measurement-based quantum computation. This implies that any quantum state, in particular any graph state |*G*〉, can be generated deterministically up to local Pauli corrections by means of single-qubit measurements (and the local Pauli corrections, being single-qubit operations, can subsequently be performed by acting directly on the qubits in question). An arbitrary graph state of *m* qubits can be generated from a 2D cluster state of size *O*(*m*) × *O*(*m*²) where the quadratic scaling reflects the fact that *O*(*m*²) CZ gates (corresponding to edges), together with *O*(*m*²) SWAP operations are sufficient to prepare any graph state. The graph state |*G*〉 is thereby prepared on some set of auxiliary qubits.

The zipper scheme can be used to transport (teleport) the auxiliary qubits of the graph state to arbitrary locations in the (partially processed) 2D cluster state, similar to what was described above in relation to the preparation of multiple Bell pairs using the zipper scheme. Accordingly, a graph state on any desired set of auxiliary qubits can be realized by processing a cluster state by single-qubit operations only.

The generation of graph states from cluster states is not restricted to this particular method. For several graph states, more efficient methods exist. For example, a three-qubit GHZ state can be generated as follows. Suppose we wish to prepare a GHZ state on three auxiliary qubits A₁, A₂ and A₃ of the 2D cluster state. Within the cluster state, a path between the first auxiliary qubit A₁ and the second auxiliary qubit A₂ is identified, and a Bell pair is established between these two qubits using the methods described above (e.g. zipper scheme). The path is continued to the third auxiliary qubit A₃, where again entanglement between the second auxiliary qubit A₂ and the third auxiliary qubit A₃ is established by measuring qubits among the path. The generated state is a 3-qubit graph state with an edge between qubits A₁ and A₂ and another edge between qubits A₂ and A₃, which is equivalent to a GHZ state up to local unitary operations (where the qubit A₂ is the root qubit of the GHZ state).

Larger GHZ states and larger graph states can be generated via a merging procedure. Consider qubit 1, which is part of a first graph state, with neighbors *N*₁, and qubit 2, which is part of a second graph state, with neighbors *N*₂ . Consider an auxiliary qubit *C*, and a first path between qubit 1 and *C*, and a second path between qubit 2 and *C*. Qubit 1 is connected to qubit C by measuring among the first path (zipper scheme), and similarly qubit *C* is connected to qubit 2 by measuring among the second path (zipper scheme). By performing Y-measurements on auxiliary qubit *C* and qubit 2, qubit 2 is merged into qubit 1. That is, qubit 1 has as neighbors now all its initial neighbors *N*₁ of the first graph, and also all neighbors *N*₂ of qubit 2 of the second graph. For example, one may apply this procedure to the two root qubits of two three-qubit GHZ states, and thereby generate a five-qubit GHZ state.

### III. Examples of quantum computation architectures

In the following, several examples of quantum computation architectures are discussed which can be used to realize the above-described method.

### III.1. Rectangular lattice with open leaves

An architecture that is well suited to realize the above scheme is given by a 2D rectangular lattice with nearest neighbor interactions for auxiliary qubits, while each data qubit, provided in the center of each plaquette of the lattice of auxiliary qubits, can be coupled to one of the auxiliary qubits via a "diagonal" interaction, as shown in Fig. 22(a). This allows for the generation of a 2D cluster states in a single time step (see Fig. 22(b)), and all data qubits have uniform access to long-distance interactions.

One can modify this architecture by attaching multiple data qubits to each auxiliary qubit (so that, in Fig. 22(a), each plaquette of auxiliary qubits would contain two or more data qubits, each coupled to the same auxiliary qubit). Only one of these data qubits at a time can access a long-range entangling gate in each step, or alternatively two of these data qubits can interact with each other via the same mediating auxiliary qubit. In the latter case, there will be a hole in the 2D cluster state, which does however not hinder the remaining nodes from generating long-range Bell states and implement gates. One may also allow for more auxiliary qubits or qubits for storage, and produce multiple copies of 2D cluster states that can be consumed on demand to generate multiple gates.

### III.2. Triangle-square lattices

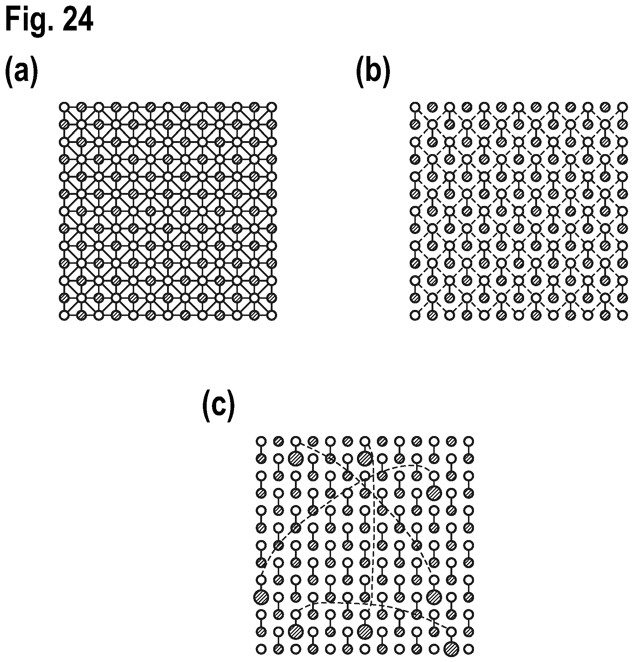

Other planar structures are also suitable to implement the above scheme, as illustrated in Figs. 24(a)-(c). The underlying lattice is a triangular-rectangular lattice. Fig. 24(a) shows the pattern of available interactions in such a setting, indicated by the lines between the qubits. As before, data qubits are shown as hatched circles and auxiliary qubits are circles without hatching. In such a system, a 2D cluster state of the auxiliary qubits can be prepared in a "tilted" orientation, where the edges of the 2D cluster state (corresponding to the application of CZ gates) extend diagonally, as illustrated in Fig. 24(b). As before, each plaquette of the 2D cluster state includes a data qubit. Further, the 2D cluster state can again be prepared in a single time step. Within this setting, a plurality of N quantum operations can be realized by processing the 2D cluster state to prepare Bell states in essentially the same manner as described above, as illustrated in Fig. 24(c).

(For completeness it is noted that, in Fig. 24(b) and likewise Fig. 24(c), the vertical edges between each data qubit and a corresponding auxiliary qubit does not indicate the application of a CZ gate, but merely reflect that an interaction between these qubits is available i.e. can take place if desired, similar to Fig. 24(a)).

It is noted that other variants of rectangular-triangular lattices than the one shown in Fig. 24 exist, which are also suitable.

### III.3. Decorated honeycomb lattice

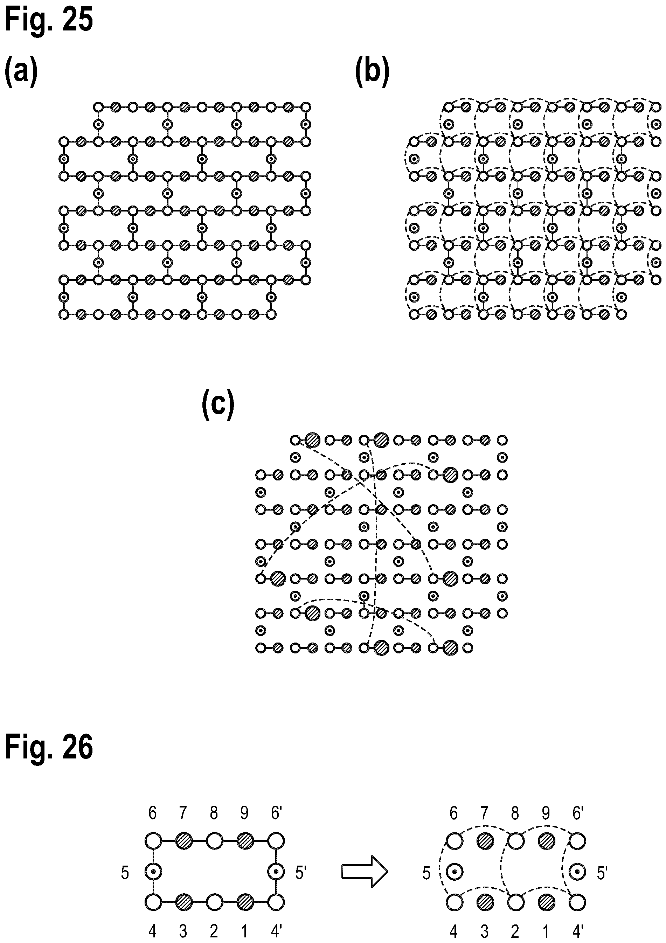

Existing quantum computers based on superconducting qubits (e.g. the IBMQ quantum computer) may have a limited connectivity, for example in the manner depicted in Fig. 25(a).

Fig. 25(a) shows qubits arranged according to a decorated hexagonal lattice (also called decorated honeycomb lattice). The pattern of available interactions is again indicated by the lines between the qubits. Such a system of qubits can also be used to perform the methods described herein, as follows. The qubits are divided into data qubits (circles with hatching), auxiliary qubits (circles without hatching), and ancilla qubits (circles with a dot in the center). A 2D cluster state can be prepared on the auxiliary qubits by performing a sequence of operations as illustrated in Fig. 26.

Fig. 26 shows a plaquette of the decorated hexagonal lattice, where the qubits are numbered from 1 to 9. Further, qubits 4', 5' and 6' are also shown, which stem from a similar numbering of the adjacent plaquette. Qubits 1, 3, 7 and 9 are data qubits (circles with hatching). Qubits 2, 4, 6, 8, 4' and 6' are auxiliary qubits (circles without hatching). Qubits 5 and 5' are ancilla qubits (circles with a dot in the center).

The qubits shown in Fig. 26 (and similarly for the remaining qubits of the lattice) can be acted upon by nearest-neighbor quantum interactions, according to the available interaction pattern as shown in Fig. 25(a), in order to prepare a 2D cluster state. Specifically, the following operations are performed (where the auxiliary qubits 2, 4, 6, 8, 4' and 6' and the ancilla qubits 5 and 5'are initially prepared in the state |+>). Step 1: Entangle qubits 4 and 5, entangle qubits 5 and 6, SWAP qubits 2 and 3, and SWAP qubits 7 and 8. Step 2: measure qubit 5 in the Y basis, which results in qubits 4 and 6 being entangled; also, SWAP qubits 2 and 4 and SWAP qubits 6 and 8. Step 3: entangle qubits 2 and 4, entangle qubits 6 and 8, entangle qubits 2 and 5 and entangle qubits 5 and 8. Step 4: measure qubit 5 in the Y basis, which results in qubits 2 and 8 being entangled; also, SWAP qubits 2 and 4 and SWAP qubits 6 and 8. Step 5: SWAP qubits 2 and 3, SWAP qubits 7 and 8, SWAP qubits 1 and 4' and SWAP qubits 9 and 6'. Step 6: entangle qubits 2 and 4' and entangle qubits 8 and 6'. Step 7: SWAP qubits 1 and 4' and SWAP qubits 9 and 6'. In the preceding steps, the operation "Entangle qubits *a* and *b"* means that a CZ gate is applied to the qubits in question. Further, "SWAP qubits *a* and *b"* means that a SWAP gate is applied (this is a unitary operation; the physical location of the qubits remains unchanged). After performing steps 1 through 6 on all plaquettes, a 2D cluster state is prepared on the auxiliary qubits, as illustrated in the right-hand portion of Fig. 26. Thereafter, the ancilla qubits (e.g. qubits 5 and 5' in Fig. 26) are not needed in the subsequent quantum protocols and may be discarded.

Generally, in the above scheme, entanglement generation in the horizontal direction is done by bypassing a data qubit without altering it, using SWAP operations. The vertical entanglement edges are generated utilizing the ancilla qubits, by generating a GHZ state between two auxiliary qubits and an ancilla qubit, and measuring the ancilla qubit. This provides a balance between the available number of data qubits, and efficiency to generate the required 2D cluster state and hence realize long-range gates.

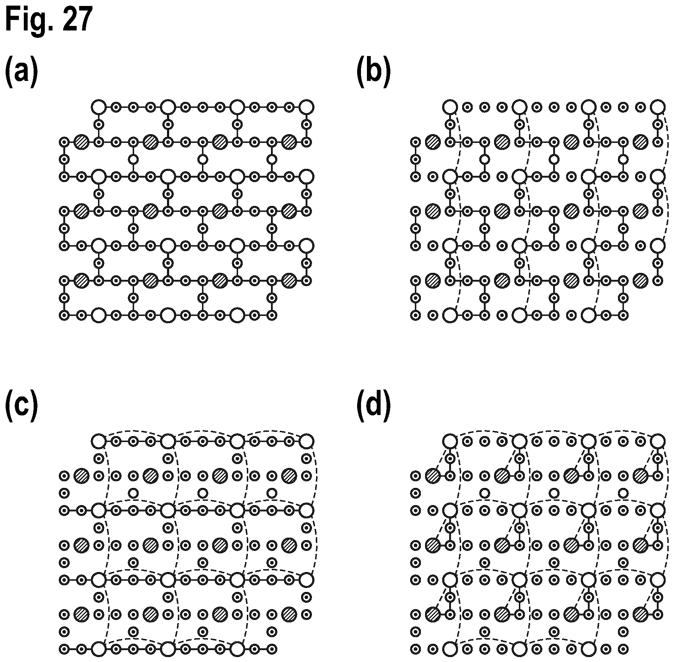

The decorated honeycomb lattice can also be utilized in a different way to obtain a 2D cluster state, as shown in Figs. 27(a)-(d).

Fig. 27(a) again shows a decorated honeycomb lattice, where the qubits are now divided in a different manner into data qubits (circles with hatching), auxiliary qubits (circles without hatching), and ancilla qubits (circles with a dot in the center). In this case, one can generate entanglement between a pair of auxiliary qubits, either in the vertical or horizontal direction, via a path of ancilla qubits extending between these auxiliary qubits, by (i) applying CZ gates between neighboring qubits on the path, and (ii) measuring all qubits along the path, except for the two auxiliary qubits at the endpoints, in the Y basis. The procedure is performed in two steps, e.g. first the vertical connections (Fig. 27(b)), and then the horizontal connections (Fig. 27(c)). Accordingly, a 2D cluster state can be prepared on the auxiliary qubits. Further, each data qubit can be coupled to an auxiliary qubit (Fig. 27(d)) in a similar manner, i.e. using a path of ancilla qubits extending from the data qubit to the auxiliary qubit. Notice that this scheme involves a (constant) overhead in the required number of qubits (ten qubits are needed in total for each data and auxiliary qubit). On the other hand, this approach offers the advantage that fewer steps are required to generate the 2D cluster state. Further, the data qubits are left untouched in the entanglement generation process, which avoids introducing additional errors on qubits that do not participate in a two-qubit gate. Entanglement can be generated beforehand and stored until it is needed to perform gates on data qubits in a flexible way.

### III.4. Further examples of planar lattices

2D cluster states can be generated from graph states corresponding to other lattice structures. For example, by performing suitable single-qubit operations, a graph state corresponding to a honeycomb lattice can be transformed into a graph state corresponding to a triangular lattice, which can in turn be transformed into a graph state corresponding to a Kagome lattice and finally to a 2D cluster state on a coarse-grained lattice. Some of the available qubits that do not participate in the 2D cluster state can be used as data qubits. This shows that other architectures corresponding to different spatial arrangements of the qubits, i.e. different from a rectangular 2D lattice, are suitable for the present approach.

### III.5. Three-dimensional architectures

Three-dimensional (3D) architectures based on 3D lattices with e.g. nearest-neighbor connectivity can also be used to establish multiple long-range gates in parallel, similarly to the above-described method that uses a 2D cluster state or other planar structures. For cubic lattices, 3D cluster states can be generated, and likewise utilized to obtain multiple Bell pairs in parallel. A Bell pair can be generated between any pair of qubits of the 3D cluster state by identifying a path between them. All qubits (except the end nodes) of the path are measured in the Y basis, and all neighboring qubits of the path are measured in *Z* . The Z measurements isolate the path - and hence a 1D cluster state - from the rest of the qubits, while the Y measurements establish a Bell pair among the end nodes. Notice that there are (at most) four neighboring qubits for each qubit on the path. Any qubit in a 3D cubic lattice has 6 neighbors - one belongs to the incoming, and one to the outgoing path, and some of the neighbors may also be neighbors of other qubits among the path in case of turning points.

3D structures offer certain advantages over 2D structures. First, the maximum distance between any two points in a 3D rectangular lattice is smaller - at most 3*n*^{1/3}, while this distance is up to 2*n*^{1/2} in a planar lattice, where we assume the same total size of the resource state, *n* , with qubits being are arranged as a $\sqrt{n} \times \sqrt{n}$ 2D lattice, or a $\sqrt[3]{n} \times \sqrt[3]{n} \times \sqrt[3]{n}$ 3D lattice.

Second, in a 3D system one can obtain more long-range Bell pairs in parallel as compared to a 2D structure. More concretely, one obtains up to *O*(*n*^{2/3}) Bell pairs, as compared to *O*(*n*^{1/2}) in a 2D structure. The generation of a single Bell pair cuts essentially a one-dimensional hole into the 3D structure. This, however, still leaves enough room to have more parallel paths. Since the length of each path is $O \left(\sqrt[3]{n}\right)$*,* one can have up to *O*(*n*^{2/3}) parallel paths that do not intersect.

### III.6. Nested structures for gate routing

One can also use 2D cluster states at different scales to form a nested structure for long-range entanglement (and hence gate) routing. Such an approach is particularly useful when the data qubits can be organized in groups with different required connectivity (in terms of entangling gates) between groups. Such hierarchical structures are beneficial in network design, and can also be utilized in quantum processor architectures. With the present approach, this translates directly to the entanglement structure of the underlying multipartite entangled state that is generated and further manipulated.

### IV. Advantages of the present method

There are multiple advantages in using cluster states, or other instances of a "first entangled quantum state", as compared to utilizing only bipartite entanglement (Bell states). First of all, cluster states can be established beforehand, even before it is known which gates should be performed. The cluster state can then be flexibly transformed to the desired target configuration by means of a single round of local measurements. This allows one to perform multiple two-qubit gates in a single step (i.e. a very small computational depth), where it can be essentially freely chosen among which qubits. Alternatively, the cluster state can also be transformed to other graph states among certain target qubits, which allows one to perform multi-qubit gates or entire Clifford circuits - again in a flexible way and in a single step. Further, a cluster state is in itself a resource for quantum computation: it can be used to perform some side-computations in a measurement-based way, which involves sequences of measurements and feed forward.

The 2D cluster state also allows one to perform the zipper scheme to generate multiple Bell pairs in parallel, and with a reduced cost in terms of qubits that need to be measured as compared to schemes based on cutting paths.

### V. Alternative method without generation of first entangled quantum state

The above-described method involves the realization of quantum gates by first preparing a 2D cluster state or other resource state and subsequently processing this resource state by single-qubit operations. Here we describe an alternative approach ("second method" as described herein) with similar advantages, but which does not involve the preparation of a resource state.

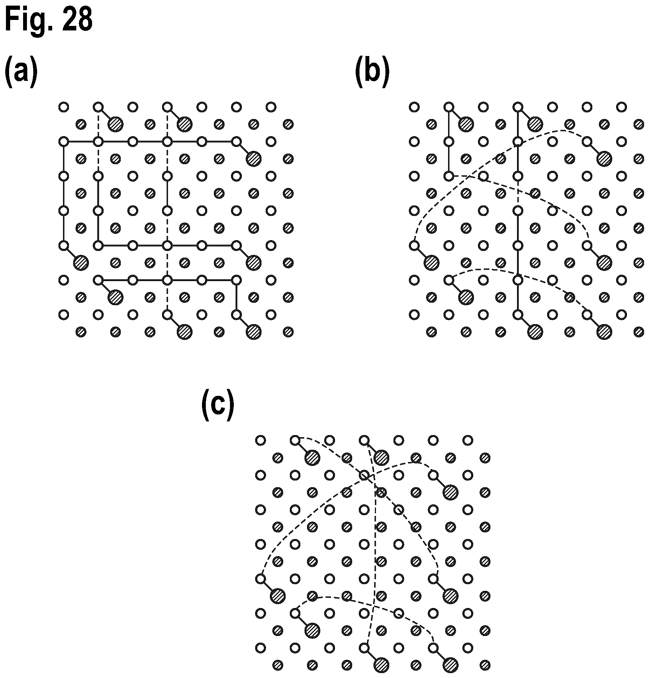

Fig. 28 (a) shows a quantum system including data qubits (with hatching) and auxiliary qubits (without hatching) arranged according to a regular two-dimensional lattice. This is similar to e.g. Fig. 22(a); yet in the present case, no cluster state or other entangled resource state will be prepared on the auxiliary qubits.

It is envisaged to generate Bell pair between some of the auxiliary qubits, as indicated in Fig. 28(c) by the dashed lines between pairs of auxiliary qubits. This will be achieved by performing single-qubit measurements along paths connecting the auxiliary qubits in question.

In a first round, as illustrated in Fig. 28(a), all non-conflicting connections of the paths are established by performing nearest-neighbor CZ gates (indicated by solid vertical and horizontal lines between the auxiliary qubits in question). At crossings between two paths, only the horizontal connections are established. This is followed by Y-measurements on all qubits of each path, except for the end points of the path, resulting in multiple Bell pairs being generated, as indicated in Fig. 28(b) by the dashed lines. Notice that each path may be intersected at multiple crossings.

In a second round, as further illustrated in Fig. 28(b), the vertical connections at each crossing are established by performing the appropriate CZ-gates (solid vertical lines in Fig. 28(b)), followed again by Y-measurements on all intermediate qubits. As a result, multiple long-range Bell pairs are obtained as illustrated by the dashed lines in Fig. 28(c), which can be used to implement long-range gates among the data qubits in question.

With the above approach, $O \left(\sqrt{n}\right)$ Bell pairs can be established in parallel by using only two rounds of nearest neighbor gates, and two rounds of mid-circuit measurements, which allows to implement multiple long-range gates. Bottlenecks only appear at intersection points of two paths, where each crossing can be resolved in two rounds.

Overall, this procedure is less efficient (by a factor of two) than the approach proposed above based on an entangled resource state such as a cluster state.

### VI. Gate fidelities

Here we briefly discuss the relation between nearest-neighbor physical gate fidelities, lattice geometry, and the quality of the realized long-range gates.

One can use the noisy stabilizer formalism to efficiently compute the fidelity of long-distance Bell pairs generated from 1D or 2D cluster states, taking noise in the preparation of the 2D cluster state and imperfections in measurements into account. Fidelities of Bell pairs generated in 2D (and other) lattice structures subjected to different kinds of Pauli noise modeling imperfect state preparation, storage and measurements, can be computed. The fidelity is determined by number of measured qubits, which is given by the length of the path and the number of neighbors that need to measured when using a cutting strategy. We note that using the zipper scheme (involving X measurements) to generated Bell pairs by measuring along diagonal paths reduces the number of required measurements, and hence increases fidelity. The fidelity of Bell pairs directly translates into gate fidelity of long-ranged gates.

This also implies that in 3D structures, larger gate fidelities can be achieved since fewer measurements are required to generate a long-ranged Bell pairs for large system sizes.

### VII. Summary

The above-described method involves a quantum computer architecture that enhances limited, nearest neighbor connectivity to full connectivity by means of multipartite entanglement. The quantum system is split into data qubits and auxiliary qubits, where a 2D cluster state, or another first entangled quantum state, is generated and shared among the auxiliary qubits. This multipartite entangled state can be flexibly transformed into different target configurations by means of single-qubit measurements, including multiple long-range Bell states shared between distant pairs of qubits. In turn, these Bell states allow one to implement multiple long-range quantum operations in parallel. This provides for a quantum processor architecture where multipartite entangled states are utilized to enhance flexibility and long-range connectivity, and measurement-based elements support a circuit-based design.

While the foregoing is directed to embodiments, other and further embodiments may be devised without departing from the scope determined by the claims.

## Claims

1. A method of performing a quantum computation, comprising:
preparing a first entangled quantum state (250) on at least a subset of a set of auxiliary constituents (110) of a quantum system (100), the quantum system comprising the set of auxiliary constituents and a set of primary constituents (120);
performing N quantum protocols on the quantum system, wherein each quantum protocol of the N quantum protocols realizes a quantum operation (720ab, 920cd, 920ef, 1320ab, 1320cd) of N quantum operations, wherein each quantum operation of the N quantum operations acts on two or more primary constituents,
wherein, for each quantum operation of the N quantum operations, a domain set associated with the quantum operation consists of the primary constituents acted upon by the quantum operation,
wherein, for each quantum operation of the N quantum operations, the quantum protocol realizing the quantum operation comprises:
processing a portion of the first entangled quantum state, or a portion of a partially processed first entangled quantum state (450, 950) being a quantum state resulting from processing the first entangled quantum state in one or more previous quantum protocols of the N quantum protocols, to prepare an auxiliary entangled quantum state (410ab) on an auxiliary set (110a, 110b) comprising two or more auxiliary constituents, wherein the processing includes performing one or more single-body quantum operations on one or more auxiliary constituents of the first entangled quantum state or of the partially processed first entangled quantum state;
coupling each primary constituent (120a, 120b) of the domain set of the quantum operation to an associated auxiliary constituent (110a, 110b) of the auxiliary set by performing one or more short-range quantum interactions (530a, 530b), wherein the coupling is performed before, during or after the processing of the portion of the first entangled state or the portion of the partially processed first entangled quantum state; and
performing one or more measurements on at least one primary constituent (120a, 120b) of the domain set and/or on at least one auxiliary constituent (110a, 110b) of the auxiliary set, wherein the one or more measurements are performed in addition to the coupling or wherein the one or more measurements form part of the coupling.

2. The method of claim 1, wherein the first entangled quantum state is a default quantum state independent of the N quantum operations.

3. The method of claim 1 or 2, wherein at least one quantum operation of the N quantum operations is a long-range quantum operation acting on at least two primary constituents that are spaced apart from each other by a distance greater than an interaction cut-off distance of the quantum system.

4. The method of any of the preceding claims, wherein the N quantum protocols act respectively on N portions of the quantum system, wherein each of the N portions includes a subset of the set of primary constituents and a subset of the set of auxiliary constituents, wherein the N portions are mutually disjoint.

5. The method of any of the preceding claims, wherein the N quantum protocols are performed in parallel.

6. The method of any of the preceding claims, wherein the auxiliary constituents of the first entangled quantum state include a total of M auxiliary constituents, wherein N has a scaling greater than a logarithmic scaling with M, particularly a scaling of at least M^{1/q} for some number q ≥ 2.

7. The method of any of the preceding claims, wherein the quantum system comprises constituents, the method further comprising:
assigning a first subset of the constituents to be the set of primary constituents; and
assigning a second subset of the constituents to be the set of auxiliary constituents,
particularly wherein the first subset is assigned to be the set of primary constituents independently of the N quantum operations that are to be realized and/or the second subset is assigned to be the set of auxiliary constituents independently of the N quantum operations that are to be realized.

8. The method of any of the preceding claims, wherein, for each quantum operation of the N quantum operations, the quantum protocol realizing the quantum operation further comprises:
in response to performing the one or more measurements on the at least one primary constituent of the domain set and/or the at least one auxiliary constituent of the auxiliary set, performing one or more correction operations on one or more primary constituents of the domain set and/or one or more auxiliary constituents of the auxiliary set.

9. The method of any of the preceding claims, wherein the first entangled quantum state is prepared by short-range quantum operations only and/or wherein each quantum protocol of the N quantum protocols includes short-range quantum operations only.

10. The method of any of the preceding claims, wherein the N quantum protocols comprise a first quantum protocol realizing a first quantum operation (1320ab) of the N quantum operations and a second quantum protocol realizing a second quantum operation (1320cd) of the N quantum operations,
wherein the first quantum protocol comprises processing a first portion of the first entangled quantum state, or a first portion of a partially processed first entangled quantum state being a quantum state resulting from processing the first entangled quantum state in one or more previous quantum protocols of the N quantum protocols, to prepare a first auxiliary entangled quantum state (1210ab) on a first auxiliary set (110a, 110b) comprising two or more auxiliary constituents, wherein the processing of the first portion includes performing single-body quantum operations on a first plurality of auxiliary constituents of the first entangled quantum state or of the partially processed first entangled quantum state,
wherein the second quantum protocol comprises processing a second portion of the first entangled quantum state, or a second portion of a partially processed first entangled quantum state being a quantum state resulting from processing the first entangled quantum state in one or more previous quantum protocols of the N quantum protocols, to prepare a second auxiliary entangled quantum state (1210cd) on a second auxiliary set (110c, 110d) comprising two or more auxiliary constituents, wherein the processing of the second portion includes performing single-body quantum operations on a second plurality of auxiliary constituents of the first entangled quantum state or of the partially processed first entangled quantum state,
wherein at least a subset of the first plurality of auxiliary constituents defines a first path (1110ab) of auxiliary constituents,
wherein at least a subset of the second plurality of auxiliary constituents defines a second path (1110cd) of auxiliary constituents,
wherein the first path crosses the second path.

11. A method of performing a quantum computation, comprising:
performing N quantum protocols on a quantum system (100) comprising a set of primary constituents (120) and a set of auxiliary constituents (110), wherein each quantum protocol of the N quantum protocols realizes a quantum operation (720ab, 920cd, 920ef, 1320ab, 1320cd) of N quantum operations, wherein each quantum operation of the N quantum operations acts on two or more primary constituents,
wherein, for each quantum operation of the N quantum operations, a domain set associated with the quantum operation consists of the primary constituents acted upon by the quantum operation,
wherein the N quantum protocols comprise a first quantum protocol realizing a first quantum operation (1320ab) of the N quantum operations and a second quantum protocol realizing a second quantum operation (1320cd) of the N quantum operations,
wherein the first quantum protocol comprises:
processing a first plurality of auxiliary constituents to prepare a first auxiliary entangled quantum state (1210ab, 1710ab) on a first auxiliary set (110a, 110b) comprising two or more auxiliary constituents, wherein at least a subset of the first plurality of auxiliary constituents defines a first path (1110ab, 1410ab) of auxiliary constituents;
coupling each primary constituent (120a, 120b) of the domain set of the first quantum operation to an associated auxiliary constituent (110a, 110b) of the first auxiliary set by performing one or more short-range quantum interactions, wherein the coupling is performed before, during or after the processing of the first plurality of auxiliary constituents; and
performing one or more measurements on at least one primary constituent (120a, 120b) of the domain set of the first quantum operation and/or on at least one auxiliary constituent (110a, 110b) of the first auxiliary set, wherein the one or more measurements are performed in addition to the coupling or wherein the one or more measurements form part of the coupling;
wherein the second quantum protocol comprises:
processing a second plurality of auxiliary constituents to prepare a second auxiliary entangled quantum state (1210cd, 2020cd) on a second auxiliary set (110c, 110d) comprising two or more auxiliary constituents, wherein at least a subset of the second plurality of auxiliary constituents defines a second path (1110cd, 1420cd) of auxiliary constituents, wherein the second path crosses the first path;
coupling each primary constituent (120c, 120d) of the domain set of the second quantum operation to an associated auxiliary constituent (110c, 110d) of the second auxiliary set by performing one or more short-range quantum interactions, wherein the coupling is performed before, during or after the processing of the second plurality of auxiliary constituents; and
performing one or more measurements on at least one primary constituent (120c, 120d) of the domain set of the second quantum operation and/or on at least one auxiliary constituent (110c, 110d) of the second auxiliary set, wherein the one or more measurements are performed in addition to the coupling or wherein the one or more measurements form part of the coupling.

12. A quantum computer (2100), comprising:
a quantum system (100) comprising constituents;
a quantum processing system (2110) for processing the quantum system, the quantum processing system comprising at least one of:
a quantum evolution device (2112) to evolve one or more constituents of the quantum system; and
a measurement device (2114) to measure one or more constituents of the quantum system; and
a controller (2120) connected to the quantum processing system, the controller being configured to instruct the quantum processing system to:
prepare a first entangled quantum state (250) on at least a subset of a set of auxiliary constituents (110) of the quantum system, the quantum system comprising the set of auxiliary constituents and a set of primary constituents (120);
perform N quantum protocols on the quantum system, wherein each quantum protocol of the N quantum protocols realizes a quantum operation (720ab, 920cd, 920ef, 1320ab, 1320cd) of N quantum operations, wherein each quantum operation of the N quantum operations acts on two or more primary constituents,
wherein, for each quantum operation of the N quantum operations, a domain set associated with the quantum operation consists of the primary constituents acted upon by the quantum operation,
wherein, for each quantum operation of the N quantum operations, the quantum protocol realizing the quantum operation comprises:
processing a portion of the first entangled quantum state, or a portion of a partially processed first entangled quantum state (450, 950) being a quantum state resulting from processing the first entangled quantum state in one or more previous quantum protocols of the N quantum protocols, to prepare an auxiliary entangled quantum state (410ab) on an auxiliary set (110a, 110b) comprising two or more auxiliary constituents, wherein the processing includes performing one or more single-body quantum operations on one or more auxiliary constituents of the first entangled quantum state or of the partially processed first entangled quantum state;
coupling each primary constituent (120a, 120b) of the domain set of the quantum operation to an associated auxiliary constituent (110a, 110b) of the auxiliary set by performing one or more short-range quantum interactions (530a, 530b), wherein the coupling is performed before, during or after the processing of the portion of the first entangled state or the portion of the partially processed first entangled quantum state; and
performing one or more measurements on at least one primary constituent (120a, 120b) of the domain set and/or on at least one auxiliary constituent (110a, 110b) of the auxiliary set, wherein the one or more measurements are performed in addition to the coupling or wherein the one or more measurements form part of the coupling.

13. A controller (2120) for a quantum computer (2100) acting on a quantum system (100), the controller being configured to instruct the quantum computer to:
prepare a first entangled quantum state (250) on at least a subset of a set of auxiliary constituents (110) of the quantum system, the quantum system comprising the set of auxiliary constituents and a set of primary constituents (120);
perform N quantum protocols on the quantum system, wherein each quantum protocol of the N quantum protocols realizes a quantum operation (720ab, 920cd, 920ef, 1320ab, 1320cd) of N quantum operations, wherein each quantum operation of the N quantum operations acts on two or more primary constituents,
wherein, for each quantum operation of the N quantum operations, a domain set associated with the quantum operation consists of the primary constituents acted upon by the quantum operation,
wherein, for each quantum operation of the N quantum operations, the quantum protocol realizing the quantum operation comprises:
processing a portion of the first entangled quantum state, or a portion of a partially processed first entangled quantum state (450, 950) being a quantum state resulting from processing the first entangled quantum state in one or more previous quantum protocols of the N quantum protocols, to prepare an auxiliary entangled quantum state (410ab) on an auxiliary set (110a, 110b) comprising two or more auxiliary constituents, wherein the processing includes performing one or more single-body quantum operations on one or more auxiliary constituents of the first entangled quantum state or of the partially processed first entangled quantum state;
coupling each primary constituent (120a, 120b) of the domain set of the quantum operation to an associated auxiliary constituent (110a, 110b) of the auxiliary set by performing one or more short-range quantum interactions (530a, 530b), wherein the coupling is performed before, during or after the processing of the portion of the first entangled state or the portion of the partially processed first entangled quantum state; and
performing one or more measurements on at least one primary constituent (120a, 120b) of the domain set and/or on at least one auxiliary constituent (110a, 110b) of the auxiliary set, wherein the one or more measurements are performed in addition to the coupling or wherein the one or more measurements form part of the coupling.

14. A computer program comprising instructions which, when the computer program is executed by a quantum computer (2100), cause the quantum computer to carry out the method of any of claims 1 to 11.

15. A computer-readable data carrier or a data carrier signal carrying the computer program of claim 14.
